# EUROPEAN PATENT APPLICATION

(11) **EP 3 122 068 A2**
(43) Date of publication of application: **25.01.2017**
(21) Application number: 16180814.2
(22) Date of filing: 22.07.2016
(51) Int. Cl.: H04R 5/033, G06F 3/01, H04R 1/10, H04M 1/05, A44C 5/24, G06F 1/16, H04B 1/3827, A44C 5/00, G02C 5/00, G02C 5/20

(54) **WEARABLE ELECTRONIC DEVICE**

(30) Priority: 23.07.2015 KR 20150104364
(71) Applicant: Samsung Electronics Co., Ltd., Suwon-si, Gyeonggi-do 16677 (KR)
(72) Inventor: LEE, Hyun-Seok, 16677 Gyeonggi-do (KR); LEE, Myung-Kee, 16677 Gyeonggi-do (KR); KANG, Cu-Youl, 16677 Gyeonggi-do (KR); KIM, Jin-Man, 16677 Gyeonggi-do (KR); WON, Young-Deuk, 16677 Gyeonggi-do (KR); YANG, Chul-Hyung, 16677 Gyeonggi-do (KR); LEE, Ji-Woo, 16677 Gyeonggi-do (KR)
(74) Representative: Birchenough, Lewis

(57) **Abstract**

A wearable electronic device is provided. The wearable electronic device comprises a body including a processor and at least one strap being connected with the body, wherein the strap includes a first sensor configured to detect whether a first area of the strap is bent and a first member configured to be contracted in a first direction when a current is applied thereto to adjust a bent state of the first area, wherein the processor detects whether the first area is bent by using the first sensor, and when it is detected that the first area is bent, the processor applies a current to the first member to adjust the bent state of the first area.

## Description

### TECHNICAL FIELD

The present disclosure relates to a wearable electronic device. More particularly, the present disclosure relates to a method for improving the wearability and usability of the wearable electronic device.

### BACKGROUND

A wearable electronic device that is worn on a user's body (e.g., head, hand, eye, or ear) to provide various information as well as an electronic device that may be carried by the user, such as a smart phone or a tablet personal computer (PC), have recently been utilized. For example, various kinds of wearable electronic devices, such as an earphone, a head set, a smart watch, and smart eyeglasses, that are wearable on the user's body, are utilized. In addition, such wearable electronic devices may be interlocked with other electronic devices so that the user may conveniently use the functions of the other electronic devices.

The above information is presented as background information only to assist with an understanding of the present disclosure. No determination has been made, and no assertion is made, as to whether any of the above might be applicable as prior art with regard to the present disclosure.

### SUMMARY

People's body sizes are different from individual to individual and the wearable electronic devices are manufactured based on an average body size of people. Therefore, there is a problem in that a wearable electronic device may not properly fit a user's body. Accordingly, when the user vigorously moves his/her body (for example, when exercising), the wearable electronic device may slide off or fall down from the user's body and become separated from the user's body. While a member may exist to fix the wearable electronic device to the user's body, the member is not integrally configured with the wearable electronic device. Accordingly, there is an inconvenience in that it is necessary to separately carry the member in order to fix the wearable electronic device to the body.

Aspects of the present disclosure are to address at least the above-mentioned problems and/or disadvantages and to provide at least the advantages described below. Accordingly, an aspect of the present disclosure is to provide a wearable electronic device that can solve the problems described above or other problems.

In accordance with an aspect of the present disclosure, a wearable electronic device is provided. The wearable electronic device includes a first part including a first electronic component, a second part including a second electronic component and being spaced apart from the first part, and a flexible connection part configured to interconnect the first part and the second part. The flexible connection part may include a sensor configured to sense whether at least a part of the flexible connection part is flexed, and a retention member configured to maintain a shape of the flexed at least a part of the flexible connection part.

In accordance with another aspect of the present disclosure, a wearable electronic device is provided. The wearable electronic device includes a first part including a first sound output module, a second part including a second sound output module, a third part arranged between the first part and the second part, a flexible first connection part configured to interconnect a first end of the first part and a first end of the third part, and a flexible second connection part configured to interconnect a first end of the second part and a second end of the third part. At least one of the flexible first connection part and the flexible second connection part may include a sensor configured to sense whether at least a part of the flexible first connection part or at least a part of the flexible second connection part is flexed. At least one of the flexible first connection part and the flexible second connection part may include a shape memory alloy.

In accordance with another aspect of the present disclosure, a wearable electronic device is provided. The wearable electronic device includes a body including a processor, and at least one strap being connected with the body. The strap may include a first sensor configured to detect whether a first area of the strap is bent, and a first member configured to be contracted in a first direction when a current is applied thereto to adjust the bent state of the first area. The processor may detect whether the first area is bent by using the first sensor, and when it is detected that the first area is bent, the processor may apply a current to the first member to adjust the bent state of the first area.

In accordance with another aspect of the present disclosure, a non-transitory computer-readable storage medium that stores a program executed on a computer is provided. The program includes an executable command that, when executed by a processor included in a wearable electronic device, causes the processer to detect, through a first sensor within a strap of the electronic device, whether a first area of the strap is bent, and apply a current to the first member within the strap when it is detected that the first area is bent to adjust a bent state of the first area.

In accordance with another aspect of the present disclosure, a strap connected to a wearable electronic device is provided. The strap includes a first sensor configured to detect whether a first area of the strap is bent, a first member configured to be contracted in a first direction to adjust a bent state of the first area when a current is applied thereto, a connection part configured to connect the strap with the wearable electronic device, and a communication unit configured to transmit/receive a signal to/from the wearable electronic device.

According to various embodiments of the present disclosure, a member to adjust a bent state of a strap of a wearable electronic device is included in the strap so that mobility of the strap can be reduced. By reducing the mobility of the strap of the wearable electronic device, the wearable electronic device can be more fixed to the user's body. In addition, because the member is included in the strap, it is not necessary for a user to carry a separate component in order to fix the wearable electronic device to the user's body.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a network environment that includes an electronic device according to various embodiments of the present disclosure;
FIG. 2 is a block diagram of a program module according to various embodiments of the present disclosure;
FIG. 3 is a view illustrating an electronic device according to various embodiments of the present disclosure;
FIG. 4 illustrates a structure of an electronic device according to various embodiments of the present disclosure;
FIGS. 5A and 5B are views for describing a flex sensor according to various embodiments of the present disclosure and operations thereof;
FIG. 6 is an electronic device according to various embodiments of the present disclosure;
FIG. 7 illustrates a configuration of an electronic device according to various embodiments of the present disclosure;
FIGS. 8A and 8B are views for describing a characteristic of a member that adjusts the bending of a strap of an electronic device according to various embodiments of the present disclosure;
FIG. 9 illustrates a configuration of a strap of an electronic device according to various embodiments of the present disclosure;
FIG. 10 illustrates an electronic device in which a first member and a second member are included according to various embodiments of the present disclosure;
FIG. 11 is a flow chart of a method of adjusting a bent state of a strap of an electronic device according to various embodiments of the present disclosure;
FIG. 12 is a flow chart of a method of adjusting a bent state of a strap of an electronic device according to various embodiments of the present disclosure;
FIG. 13 is a flow chart of a method of applying a current in order to adjust a bent state of a strap of an electronic device according to various embodiments of the present disclosure;
FIG. 14A is a view exemplifying worn states of an electronic device according to various embodiments of the present disclosure;
FIG. 14B is a view illustrating a state change of the electronic device according to various embodiments of the present disclosure;
FIGS. 15A and 15B illustrate a smart watch according to various embodiments of the present disclosure;
FIG. 16 illustrates a configuration of a smart watch according to various embodiments of the present disclosure;
FIG. 17 illustrates an electronic device and a strap that is removably attached to the electronic device according to various embodiments of the present disclosure;
FIGS. 18A and 18B illustrate smart eyeglasses according to various embodiments of the present disclosure; and
FIG. 19 is a block diagram illustrating an electronic device according to various embodiments of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

As used herein, the expression "have", "may have", "include", or "may include" refers to the existence of a corresponding feature (e.g., numeral, function, operation, or constituent element such as component), and does not exclude one or more additional features.

In the present disclosure, the expression "A or B", "at least one of A or/and B", or "one or more of A or/and B" may include all possible combinations of the items listed. For example, the expression "A or B", "at least one of A and B", or "at least one of A or B" refers to all of (1) including at least one A, (2) including at least one B, or (3) including all of at least one A and at least one B.

The expression "a first", "a second", "the first", or "the second" used in various embodiments of the present disclosure may modify various components regardless of the order and/or the importance but does not limit the corresponding components. For example, a first user device and a second user device indicate different user devices although both of them are user devices. For example, a first element may be termed a second element, and similarly, a second element may be termed a first element without departing from the scope of the present disclosure.

It should be understood that when an element (e.g., first element) is referred to as being (operatively or communicatively) "connected," or "coupled," to another element (e.g., second element), it may be directly connected or coupled directly to the other element or any other element (e.g., third element) may be interposer between them. In contrast, it may be understood that when an element (e.g., first element) is referred to as being "directly connected," or "directly coupled" to another element (second element), there are no element (e.g., third element) interposed between them.

The expression "configured to" used in the present disclosure may be exchanged with, for example, "suitable for", "having the capacity to", "designed to", "adapted to", "made to", or "capable of" according to the situation. The term "configured to" may not necessarily imply "specifically designed to" in hardware. Alternatively, in some situations, the expression "device configured to" may mean that the device, together with other devices or components, "is able to". For example, the phrase "processor adapted (or configured) to perform A, B, and C" may mean a dedicated processor (e.g., embedded processor) only for performing the corresponding operations or a generic-purpose processor (e.g., central processing unit (CPU) or application processor (AP)) that can perform the corresponding operations by executing one or more software programs stored in a memory device.

Unless defined otherwise, all terms used herein, including technical and scientific terms, have the same meaning as those commonly understood by a person skilled in the art to which the present disclosure pertains. Such terms as those defined in a generally used dictionary may be interpreted to have the meanings equal to the contextual meanings in the relevant field of art, and are not to be interpreted to have ideal or excessively formal meanings unless clearly defined in the present disclosure. In some cases, even the term defined in the present disclosure should not be interpreted to exclude embodiments of the present disclosure.

An electronic device according to various embodiments of the present disclosure may include at least one of, for example, a smart phone, a tablet personal computer (PC), a mobile phone, a video phone, an electronic book reader (e-book reader), a desktop PC, a laptop PC, a netbook computer, a workstation, a server, a personal digital assistant (PDA), a portable multimedia player (PMP), a Moving Picture Experts Group phase 1 or phase 2 (MPEG-1 or MPEG-2), a Moving Picture Experts Group audio layer-III (MP3) player, a mobile medical device, a camera, and a wearable device. According to various embodiments of the present disclosure, the wearable device may include at least one of an accessory type (e.g., a watch, a ring, a bracelet, an anklet, a necklace, a pair of glasses, a contact lens, or a head mounted device (HMD)), a fabric or clothing integrated type (e.g., an electronic clothing), a body-mounted type (e.g., a skin pad, or tattoo), and a bio-implantable type (e.g., an implantable circuit).

According to various embodiments of the present disclosure, the electronic device may be a home appliance. The home appliance may include at least one of, for example, a television (TV), a digital versatile disc (DVD) player, an audio player, a refrigerator, an air conditioner, a vacuum cleaner, an oven, a microwave oven, a washing machine, an air cleaner, a set-top box, a home automation control panel, a security control panel, a TV box (e.g., Samsung HomeSync™, Apple TV™, or Google TV™), a game console (e.g., Xbox™ and PlayStation™), an electronic dictionary, an electronic key, a camcorder, and an electronic photo frame.

According to an embodiment of the present disclosure, the electronic device may include at least one of various medical devices (e.g., various portable medical measuring devices such as a blood glucose monitoring device, a heart rate monitoring device, a blood pressure measuring device, a body temperature measuring device, etc., a magnetic resonance angiography (MRA) device, a magnetic resonance imaging (MRI) device, a computed tomography (CT) machine, and an ultrasonic machine), a navigation device, a global positioning system (GPS) receiver, an event data recorder (EDR), a flight data recorder (FDR) , vehicle infotainment devices, an electronic device for a ship (e.g., a navigation device for a ship, and a gyro-compass), avionics, security devices, an automotive head unit, a robot for a home or an industry, an automatic teller's machine (ATM) in banks, point of sales (POS) in a shop, or an internet device of things (e.g., a light bulb, various sensors, an electric or a gas meter, a sprinkler device, a fire alarm, a thermostat, a streetlamp, a toaster, sporting goods, a hot water tank, a heater, a boiler, etc.).

According to various embodiments of the present disclosure, the electronic device may include at least one of a part of furniture or a building/structure, an electronic board, an electronic signature receiving device, a projector, and various kinds of measuring instruments (e.g., a water meter, an electric meter, a gas meter, and a radio wave meter). The electronic device according to various embodiments of the present disclosure may be a combination of one or more of the aforementioned various devices. The electronic device according to embodiments of the present disclosure may be a flexible device. Further, the electronic device according to an embodiment of the present disclosure is not limited to the aforementioned devices, and may include a new electronic device according to the development of technology.

Hereinafter, an electronic device according to various embodiments of the present disclosure will be described with reference to the accompanying drawings. As used herein, the term "user" may indicate a person who uses an electronic device or a device (e.g., an artificial intelligence electronic device) that uses an electronic device.

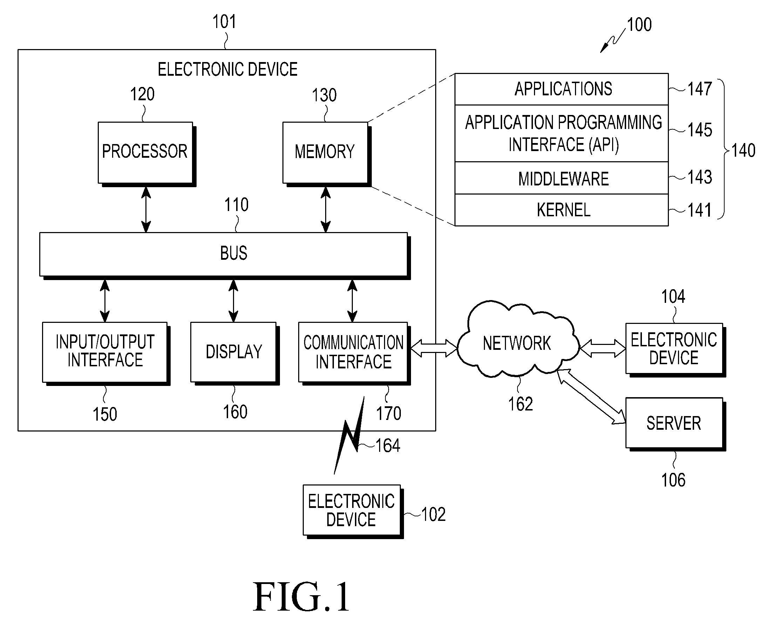

FIG. 1 illustrates a network environment that includes an electronic device according to various embodiments of the present disclosure.

Referring to FIG. 1, descriptions will be made on an electronic device 101 within a network environment 100 in various embodiments. The electronic device 101 may include a bus 110, a processor 120, a memory 130, an input/output interface 150, a display 160, and a communication interface 170. In a certain embodiment of the present disclosure, the electronic device 101 may omit at least one of the components or may be additionally provided with another component.

The bus 110 may include, for example, a circuit that connects the above-discussed elements and transmits communication data (e.g., a control message and/or data) between the elements.

The processor 120 may include one or more of a CPU, an AP, and a communication processor (CP). The processor 120 may execute, for example, an arithmetic operation or data processing related to a control and/or communication of one or more other elements of the electronic device 101.

The memory 130 may include a volatile memory and/or a nonvolatile memory. The memory 130 may store therein, for example, commands or data related to one or more components of the electronic device 101. According to an embodiment of the present disclosure, the memory 130 may store therein software and/or a program 140. The program 140 may include, for example, a kernel 141, a middleware 143, an application programming interface (API) 145, and/or application programs ("applications") 147. At least some of the kernel 141, the middleware 143, and the API 145 may be referred to as an operating system (OS).

The kernel 141 may control or manage, for example, system resources (e.g., the bus 110, the processor 120, or the memory 130) used for executing operations or functions implemented by programs (e.g., the middleware 143, the API 145, or the applications 147). In addition, the kernel 141 may provide an interface that allows the middleware 143, the API 145, or the applications 147 to access individual components of the electronic device 101 so as to control or manage system resources.

The middleware 143 may play an intermediary role such that the API 145 or the applications 147 may communicate with the kernel 141 so as to exchange data.

In addition, the middleware 143 may process, according to priority, one or more task requests received from the applications 147. For example, the middleware 143 may assign a priority that is capable of using the system resources of the electronic device 101 (e.g., the bus 110, the processor 120, or the memory 130), to at least one of the applications 147. For example, the middleware 143 may perform scheduling or load balancing for one or more task requests by processing the one or more task requests according to the priority assigned to at least one of the applications 147.

The API 145 is, for example, an interface to allow the applications 147 to control functions provided by the kernel 141 or the middleware 143 and may include, for example, at least one interface or function (e.g., commands) for a file control, a window control, an image processing, or a character control.

The input/output interface 150 may serve as an interface that is capable of delivering commands or data that are input from, for example, a user or an external electronic device to the other element(s) of the electronic device 101. Also, the input/output interface 150 may output commands or data received from the other element(s) of the electronic device 101 to the user or the external electronic device.

The display 160 may include, for example, a liquid crystal display (LCD), a light emitting diode (LED) display, an organic light emitting diode (OLED) display, a microelectromechanical systems (MEMS) display, or an electronic paper display. The display 160 displays various contents (e.g., text, image, video, icon, and symbol) to, for example, the user. The display 160 may include a touch screen, and may receive a touch input, a gesture input, a proximity input and a hovering input that is made using, for example, an electronic pen or a part of the user's body.

The communication interface 170 may set, for example, communication between the electronic device 101 and an external electronic device (e.g., a first external electronic device 102, a second external electronic device 104, or a server 106). For example, the communication interface 170 may communicate with the external electronic device (e.g., the second external electronic device 104 or the server 106) by being connected with a network 162 through wired or wireless communication.

The wireless communication may use at least one of, for example, long term evolution (LTE), long term evolution-advanced (LTE-A), code division multiple access (CDMA), wideband CDMA (WCDMA), universal mobile telecommunications system (UMTS), wireless broadband (WiBro), and global system for mobile communication (GSM), as a cellular communication protocol. In addition, the wireless communication may include, for example, a short range communication 164. The short range communication 164 may include at least one of, for example, Wi-Fi, Bluetooth, near field communication (NFC), and global navigation satellite system (GNSS). According to, for example, a use area or a bandwidth, the GNSS may include at least one of, for example, GPS, global navigation satellite system (GLONASS), BeiDou navigation satellite system (hereinafter, referred to as "BeiDou"), Galileo, and the European global satellite-based navigation system. Hereinafter, in the specification, "GPS" may be interchangeably used with "GNSS". The wired communication may use at least one of, for example, universal serial bus (USB), high definition multimedia interface (HDMI), recommended standard 232 (RS-232), and plain old telephone service (POTS). The network 162 may include a telecommunication network, for example, at least one of a computer network (e.g., local area network (LAN) or wide area network (WAN)), Internet, and a telephone network.

Each of the first and second external electronic devices 102 and 104 may be a type of device that is the same as or different from the electronic device 101. According to an embodiment of the present disclosure, the server 106 may include one or more groups of servers. According to various embodiments of the present disclosure, all or some of the operations executed by the electronic device 101 may be executed by another electronic device or a plurality of other electronic devices (e.g., external electronic devices 102 and 104 or the server 106). According to an embodiment of the present disclosure, in a case where the electronic device 101 should perform a certain function or service automatically or by a request, the electronic device 101 may request some functions associated therewith from the other electronic devices (e.g., the external electronic devices 102 and 104 or the server 106) instead of or in addition to executing the function or service by itself. The other electronic devices (e.g., the external electronic devices 102 and 104 or the server 106) may execute the requested functions or additional functions, and may transmit the results to the electronic device 101. The electronic device 101 may provide the requested functions or services by processing the received results as they are or with additions thereto. For this purpose, for example, a cloud computing technique, a distributed computing technique, or a client-server computing technique may be used.

The processor 120 may process at least a part of the information acquired from the other elements (e.g., the memory 130, the input/output interface 150, the communication interface 170, etc.), and may use it in various manners. For example, the processor 120 may control at least some functions of the electronic device 101 such that the electronic device 101 is interlocked with the other electronic devices (e.g., the external electronic devices 102 and 104 or the server 106). The processor 120 may be integrated in the communication interface 170. According to an embodiment of the present disclosure, at least one configuration of the processor 120 may be included in the server 106, and may be supported with at least one operation implemented by the processor 120 by the server 106.

According to an embodiment of the present disclosure, the memory 130 may include instructions that cause the processor 120 to operate. For example, the memory 130 may include instructions to control the other elements of the electronic device 101, and to cause the external electronic devices 102 and 104 or the server 106 to be interlocked with each other. The processor 120 may control the other elements of the electronic device 101 and may be interlocked with the external electronic devices 102 and 104 or the server 106 based on the instructions stored in the memory 130. Hereinafter, the operations of the electronic device 101 will be described with reference to the respective elements of the electronic device 101. In addition, the instructions that cause operations to be carried out by the respective elements may be included in the memory 130.

According to various embodiments of the present disclosure, the electronic device 101 may be a device of which at least a part may be connected or disconnected. For example, a first part and a second part included in the electronic device 101 may be connected with each other through a connection part, or may be disconnected by removing the connection part. Further, the electronic device 101 may be a wearable electronic device, such as a necklace-like earphone, a head set, an electronic necklace, a band-like device (e.g., a head-wearable band, or a wrist band), an electronic bracelet, smart eyeglasses, or a pair of goggles. In addition, the first part, the second part, or the connection part may be configured in various forms according to a characteristic, a kind, or the like of the electronic device 101. As set forth below, while descriptions will be made with reference to a necklace-like earphone, a smart watch, or smart eyeglasses, it is evident to a person ordinarily skilled in the art that the present disclosure is not limited thereto and may be applicable to various wearable electronic devices.

Each of the first part and the second part may include at least one electronic component. Each of the first part and the second part may include at least one electronic component to perform a function that is supported by the electronic device 101. For example, the first part may be a main body that includes a processor to control the electronic device 101, and the second part may be a sub-body, such as an earbud that includes an audio module to output an audio signal.

The connection part may be configured to allow a wearable electronic device, such as the electronic device 101, to be worn by the user. Depending on the characteristic or the kind of the electronic device 101, the connection part may be configured in various shapes to allow the user to wear the electronic device 101.

The connection part may be configured to be flexible. The connection part may be configured to have a shape according to a characteristic of the electronic device 101 so as to allow the user to wear the electronic device 101. Without having a fixed shape, however, the connection part may be configured to be flexible such that it has mobility. By configuring the connection part to be flexible, the electronic device 101 may be used and worn to be suitable for the user's character. However, in the case where the user moves vigorously, the mobility of the connection may increase because the connection part is configured to be flexible, and due to the weight of the first part and the second part. When the mobility of the connection part increases in this way, the electronic device 101 may be separated from the user's body.

For example, in the case where the user wears a necklace-like earphone, the main body of the necklace-like earphone may be positioned behind the user's neck. When the user exercises in the state of wearing the necklace-like earphone, the weight center of the necklace-like earphone is formed behind the user's neck due to the weight of the main body. Further, because the connection part between the main body and the earbud is configured to be flexible, the main body may bounce up and down so that the necklace-like earphone may slide down or fall off from the user's body.

In order to prevent the electronic device 101 from being separated from the user's body as described above, it is necessary to reduce the mobility of the connection part and adjust the electronic device 101 such that the weight center of the electronic device 101 is not biased to one side. Accordingly, the connection part may include at least one member that adjusts or maintains the shape of the connection part in order to reduce the mobility of the connection part. The at least one member may be included in at least a part of the connection part in order to prevent the electronic device 101 from being separated from the user's body. For example, at least a part of the connection part that includes the at least one member may be included at a position to fix the shape of the electronic device 101, such as a position adjacent to the main body of the electronic device 101, so that the electronic device 101 can be prevented from being separated from the user's body.

For example, the at least one member may include a retention member configured to maintain the shape of the connection part, a stent member configured to be contracted in response to a current applied thereto, or the like. In addition, the at least one member may be configured to adjust a bent state of the connection part by being contracted in a pre-set direction when a current is applied thereto. A method of reducing the mobility of the connection part by using the at least one member in the electronic device 101 will be described below.

According to an embodiment of the present disclosure, the connection part may include a sensor configured to sense the flexure of at least a part of the connection part. For example, the sensor may be used for detecting whether at least a part of the connection part is bent. The processor 120 may determine the time point when the mobility of the connection part is reduced through the sensor. When the mobility is maintained in the state where the mobility of the connection part is reduced, an inconvenience may be caused when the user wears or uses the electronic device 101. Therefore, the processor 120 may detect whether the bending of the connection part, such as the flexure, occurs by using the sensor, and when the bending of the connection part is detected, the processor 120 may determine that the connection part is in a state where the user wears and uses the electronic device 101 and may adjust the connection part to reduce the mobility of the connection part. A specific method of confirming, by the processor 120, whether the connection part is bent through the sensor will be described below.

According to an embodiment of the present disclosure, the time point for reducing the mobility of the connection part may be determined through various methods for determining whether the user uses the electronic device 101 or wears the electronic device 101. For example, it is possible to determine whether the user uses the electronic device 101 or wears the electronic device 101 according to the user's input, or it may be determined that the electronic device is worn when a set length of time has passed after the bending of the connection part was confirmed,. In this way, a method of determining whether the electronic device is used or worn may be variously set and used according to a characteristic, a kind, or the like of the electronic device 101.

According to various embodiments of the present disclosure, the processor 120 may detect whether a first area of the connection part is bent by using a first sensor within the connection part. The first area may be at least a part of the connection part that is set in order to prevent the electronic device 101 from being separated from the user's body. For example, the first area may be set to be arranged within a set length from the body of the electronic device 101 that includes the processor 120. The set length may be set such that the shape of the connection part may be fixed by using a first member that is arranged in the first area. The set length may be variously set according to the characteristic or the kind of the electronic device 101.

According to an embodiment of the present disclosure, when the bending of the first area is detected, the processor 120 may apply a current to the first member that is arranged in the first area such that the bent state of the first area is adjusted. When the current is applied, the first member may be contracted in a first direction such that the bent state of the first area is adjusted. For example, the first member may be made of a shape memory material, and may be configured such that when a current is applied, the first member is contracted in the set direction, and when the current is interrupted, the contracted portion extends back to its original state before it was contracted.

When the bending of the first area is detected, the processor 120 may apply the current to the first member such that the electronic device 101 may reduce the mobility of the first area, and may adjust the bent state of the first area so as to cause the first area to be in more close contact with the user's body. For example, the first member may be set to be contracted toward the user's body when the electronic device 101 is worn on the user's body. Accordingly, when current is applied to the first member, the first member is contracted toward the user's body such that the first member may be in closer contact with the user's body and the mobility of the first member may also be reduced.

In addition, the first member may be configured as the retention member. For example, when an external force is applied, the first member may be bent, and when the applied external force is removed, the first member may be returned to its original shape. Alternatively, the first member may be used in order to fix the entire shape of the electronic device 101 according to the characteristic of the electronic device 101. For example, in the case where the electronic device 101 is a necklace-like earphone, the first member may be configured in a shape that has a constant curvature radius. Accordingly, the first member may cause the entire shape of the electronic device 101 to be fixed to the shape of the necklace.

According to various embodiments of the present disclosure, the first sensor is arranged in the first area so that the first sensor can be used to confirm whether the first area is bent. In addition, the first sensor may include a metal material. For example, the sensor may be a resistor, of which the resistance varies according to the bent angle. Accordingly, the processor 120 may detect a change of the resistance of the resistor included in the first sensor, and may detect whether the first area is bent based on the change of detected resistance. A method of detecting, by the processor 120, whether the first area is bent by using the resistor included in the first sensor will be described below.

According to various embodiments of the present disclosure, the processor 120 may confirm, through the first sensor, the bent state of the first area, which is adjusted when current is applied. By using the first sensor, the processor 120 may confirm the bent state of the first area as well as additional information, such as the bent direction and bent angle of the first area when current is applied.

When the confirmed bent state of the first area corresponds to a set bent state, the processor 120 may apply current to the first member on a set cycle such that the bent state of the first area is maintained at the set bent state. For example, when the current applying cycle is short, the first member may be continuously contracted, and when the current applying cycle increases, the contracted portion may be extended again. In addition, when the current is applied on the set cycle, the first member may be maintained at the bent state without being further contracted. The set cycle may be set according to the characteristic of the first member.

For example, the bent state will be described below with reference to the bent angle. It is assumed that the bent angle of the first area is a first angle and the set bent angle is a second angle. The processor 120 confirms the bent angle of the first area, and, when the first angle reaches the second angle, the processor 120 may switch the current applying cycle into the set cycle. As a result, the first member may not be further contracted, and the connection part may be maintained at the current bent state where the connection part is bent to the second angle.

According to an embodiment of the present disclosure, the bent state may be set when the user performs an input or when the connection part is manufactured. Alternatively, the bent state may be set based on the bent state of the first area, which is detected by using the first sensor at a time when current is applied. For example, when the user has adjusted the bending of the connection part to correspond to the user's own body size, the processor 120 may confirm the adjusted bent state of the first area through the first sensor, and may apply current to the first member so that the user adjusted bent state can be maintained. In this case, the processor 120 may apply current to the first member on the set cycle so that the user adjusted bent state of the connection part can be maintained.

According to various embodiments of the present disclosure, the connection part may include a second sensor that detects whether a second area of the connection part is bent, and a second member that contracts when a current is applied thereto to adjust the bent state of the second area. According to the characteristic of the electronic device 101, the bent state may vary over a plurality of areas of the connection part from area to area. In addition, in order to reduce the mobility according to the bent state, the plurality of areas may require different tensions, respectively. It may be assumed that the bent state in the second area is different from that in the first area, and thus a larger tension is required for the second area in order to reduce the mobility.

The second area may be included in the first area. Even within the first area, a portion that requires a larger tension may exist in order to reduce the mobility, and thus the second area may be included in the first area. In this case, the second member may be arranged on the first member, or may be arranged in place of the first member in the area where the first area and the second area overlap with each other.

The second sensor may be included in the second area of the connection part in order to detect whether the second area is bent. In addition, the second sensor may be arranged to be orthogonal to the first sensor such that the bending direction of the connection part, which is detected through the first sensor, and the bending direction of the connection part, which is detected through the second sensor, become different from each other.

In the case where one bending direction is sensed, each of the first sensor and the second sensor may include one resistor. Whereas, in the case where four bending directions are sensed, four resistors may be needed in a three-dimensional shape of a square pillar, a cylindrical pillar, and the like.

According to an embodiment of the present disclosure, in the case where the second area is not included in the first area, the second sensor may be arranged to be orthogonal to the first sensor so as to prevent a thickness of the connection part from increasing. Because the second sensor is configured and operated in the same manner as the first sensor, separate descriptions of the second sensor will be omitted.

When a current is applied, the second member may also be contracted in a set second direction to adjust the bent state of the second area, like the first member. The second direction may be different from or the same as the first direction.

For example, the second member also includes a shape memory material, and may be configured such that when current is applied thereto, the second member may be contracted in the set second direction, and when the current is interrupted, the contracted portion may extend back to its original state before being contracted. In the second area, a larger tension may be required in order to reduce the mobility more therein when compared to the first area. The second member may be manufactured in the form of a mesh. For example, when current is applied to the second member, each string that forms the mesh tends to recover its original shape and thus the mesh may be contracted. Whereas, when current is interrupted, each string that forms the mesh may be changed from the contracted state to the extended state. Accordingly, the mobility of the second area can be recovered again. The specific characteristics of the second member will be described below.

According to various embodiments of the present disclosure, like the first sensor, the processor 120 may detect a change in resistance of a resistor included in the second sensor, and may detect whether the second area is bent based on the detected change in resistance.

In addition, when the detected bent state of the second area is maintained for a set length of time, the processor 120 may apply a current to the second member such that the bent state of the second area is adjusted. In order to reduce the mobility of the second area, a time point of applying current to the second member may be set to be different from or the same as the time point of applying current to the first member. The time point of reducing the mobility of the connection part may be variously set according to the characteristic, use, or the like of the electronic device 101.

According to various embodiments of the present disclosure, the processor 120 may control at least one function that is supported by the electronic device 101 based on the bending directions of the first area and the second area of the connection part, which are detected through the first sensor and the second sensor, respectively. For example, the bending direction of the connection part may be used as a gesture recognition means. Accordingly, the processor 120 may control at least one function that is supported by the electronic device 101, based on the bending directions of the first area and the second area.

According to various embodiments of the present disclosure, a wearable electronic device may include: a first part including a first electronic component; a second part including a second electronic component and being spaced apart from the first part; and a flexible connection part that interconnects the first part and the second part. The flexible connection part may include: a sensor configured to sense whether at least a part of the flexible connection part is flexed; and a retention member configured to maintain a shape of the flexed at least a part of the flexible connection part.

According to various embodiments of the present disclosure, the sensor may include a metal material, and the sensor may be configured to sense whether the at least a part of the flexible connection part is flexed based on a change in resistance between at least some areas of the metal material.

According to various embodiments of the present disclosure, the retention member may include a shape memory material.

According to various embodiments of the present disclosure, the electronic device may further include a stent member configured to be contracted in response to a current applied thereto. The stent member may be arranged on the retention member, or may be arranged on at least a part of the retention member.

According to various embodiments of the present disclosure, the electronic device may further include a control circuit. The control circuit may be configured to sense whether the at least a part of the flexible connection part is flexed by using the sensor, and to execute at least one function in response to a result of the sensing.

According to various embodiments of the present disclosure, a wearable electronic device may include: a first part including a first sound output module; a second part including a second sound output module; a third part arranged between the first part and the second part; a flexible first connection part configured to interconnect a first end of the first part and a first end of the third part; and a flexible second connection part configured to interconnect a first end of the second part and a second end of the third part. At least one of the flexible first connection part and the flexible second connection part may include a shape memory alloy.

According to various embodiments of the present disclosure, the sensor may include a metal material and may be configured to sense whether the flexible first connection part or the flexible second connection part is flexed based on a change in resistance between at least some areas of the metal material.

According to various embodiments of the present disclosure, the electronic device may further include: a retention member configured to maintain a shape of the flexed at least a part of the flexible first connection part or the flexible second connection part.

According to various embodiments of the present disclosure, the second end of the first part and the second end of the second part may include structures or configurations that are capable of being connected to or disconnected from each other. In addition, the structures or configurations may be implemented to be attracted to each other by a magnetic force.

According to various embodiments of the present disclosure, a wearable electronic device is provided to include: a body including a processor; and at least one strap connected with the body. The strap may include: a first sensor configured to detect whether a first area of the strap is bent; and a first member configured to be contracted in a first direction when a current is applied thereto to adjust a bent state of the first area. The processor may detect whether the first area is bent by using the first sensor, and when it is detected that the first area is bent, the processor may apply a current to the first member to adjust a bent state of the first area.

According to various embodiments of the present disclosure, the first sensor may include a resistor arranged in the first area of the strap and having a resistance that varies according to a bent angle of the first area of the strap.

According to various embodiments of the present disclosure, the processor may detect a change in resistance of the resistor that is included in the first sensor, and may detect whether the first area is bent based on the detected change in resistance.

According to various embodiments of the present disclosure, the processor may confirm, through the first sensor, the bent state of the first area when the current is applied and when the confirmed bent state of the first area corresponds to a selected bent state, the processor may apply the current to the first member on a first cycle that is selected such that the bent state of the first area is maintained at the selected bent state.

According to various embodiments of the present disclosure, the selected bent state may be selected based on the bent state of the first area that is detected through the first sensor, or may be selected according to a user's input.

According to various embodiments of the present disclosure, the first area may be set to be arranged within a selected length from the body.

According to various embodiments of the present disclosure, the strap may further include: a second sensor configured to detect whether a second area of the strap is bent; and a second member configured to be contracted in a second direction to adjust the bent state of the second area when the current is applied thereto.

According to various embodiments of the present disclosure, when a state in which the bending of the second area is detected is maintained for a selected length of time, the processor may apply the current to the second member such that the bent state of the second area is adjusted.

According to various embodiments of the present disclosure, the first member and the second member may include a shape memory material, and the first member or the second member may be manufactured in a form of a mesh.

According to various embodiments of the present disclosure, the first sensor and the second sensor may be arranged to be orthogonal to each other such that a first bending direction of the strap, which is detected through the first sensor, and a second bending direction of the strap, which is detected through the second sensor, become different from each other.

According to various embodiments of the present disclosure, the processor may control at least one function supported by the wearable electronic device based on the bending directions of the first area and the second area, which are detected through the first sensor and the second sensor, respectively.

According to various embodiments of the present disclosure, the second sensor may include a resistor arranged within the second area of the strap and the resistor has a resistance that varies according to the bent angle.

According to various embodiments of the present disclosure, the processor may detect a change in resistance of the resistor included in the second sensor, and may detect whether the second area is bent based on the detected change in resistance.

According to various embodiments of the present disclosure, there is provided a strap connected to a wearable electronic device. The strap may include: a first sensor configured to detect whether a first area of the strap is bent; a first member configured to be contracted in a first direction to adjust a bent state of the first area when a current is applied thereto; a connection part configured to connect the strap with the wearable electronic device; and a communication unit configured to transmit/receive a signal to/from the wearable electronic device.

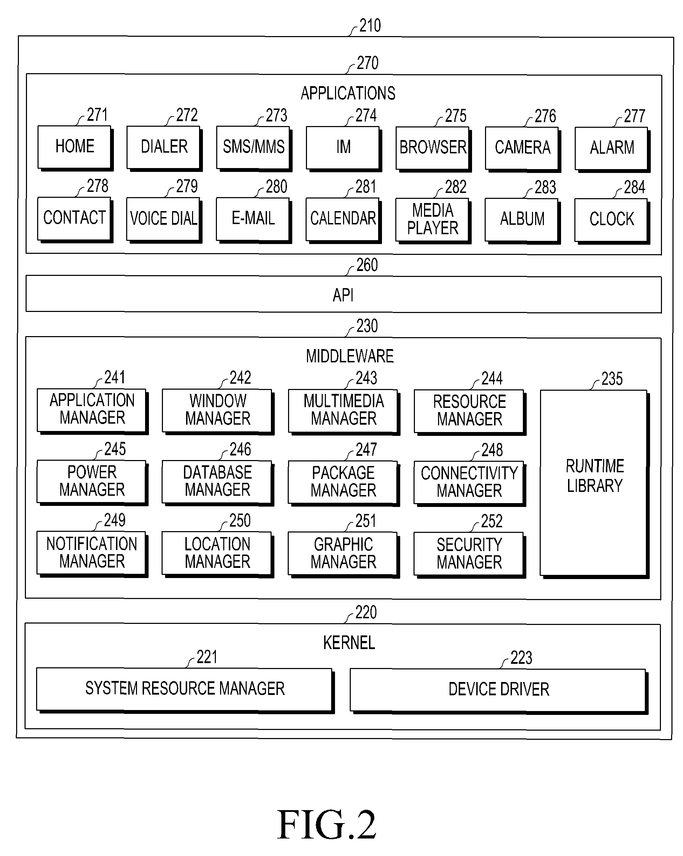

FIG. 2 is a block diagram of a program module according to various embodiments of the present disclosure.

Referring to FIG. 2, according to an embodiment of the present disclosure, a program module 210 (e.g., the program 140) may include an OS that controls resources associated with an electronic device (e.g., the electronic device 101) and/or various applications (e.g., the applications 147) that are driven on the operating system. The operating system may be, for example, Android, internet operating system (iOS), Windows, Symbian, Tizen, Bada, or the like.

The program module 210 may include a kernel 220, a middleware 230, an API 260, and/or applications 270. At least a part of the program module 210 may be preloaded on the electronic device 101, or may be downloaded from an external electronic device (e.g., the external electronic devices 102 and 104, and the server 106).

The kernel 220 (e.g., the kernel 141) may include, for example, a system resource manager 221 and/or a device driver 223. The system resource manager 221 may, for example, control, allocate, or recover a system resource. According to an embodiment of the present disclosure, the system resource manager 221 may include a process management unit, a memory management unit, a file system management unit, or the like. The device driver 223 may include, for example, a display driver, a camera driver, a Bluetooth driver, a common memory driver, a USB driver, a keypad driver, a Wi-Fi driver, an audio driver, or an inter-process communication (IPC) driver.

The middleware 230 may provide, for example, a function that is commonly required by the applications 270, or may provide various functions to the applications 270 through the API 260 such that the applications 270 can efficiently use the limited system resources within the electronic device. According to an embodiment of the present disclosure, the middleware 230 (e.g., the middleware 143) may include at least one of runtime library 235, application manager 241, window manager 242, multimedia manager 243, resource manager 244, power manager 245, database manager 246, package manager 247, connectivity manager 248, notification manager 249, location manager 250, graphic manager 251, and security manager 252.

The runtime library 235 may include, for example, a library module that may be used by a compiler in order to add a new function through a program language while the applications 270 are executed. The runtime library 235 may perform input/output management, memory management, a function for an arithmetic function, or the like.

The application manager 241 may manage, for example, a life cycle of at least one application among the applications 270. The window manager 242 may manage a graphical user interface (GUI) resource that is used in a screen. The multimedia manager 243 may grasp a format required for reproducing various media files, and may perform encoding or decoding of the media files by using a coder-decoder (codec) suitable for the corresponding format. The resource manager 244 may manage a resource, such as a source code, a memory, a storage space, or the like, of at least one application among the applications 270.

The power manager 245 may be operated together with, for example, a basic input/output system (BIOS) so as to manage a battery or a power source, and may provide, for example, power information that is required for operating the electronic device. The database manager 246 may generate, retrieve, or change a database to be used by at least one application among the applications 270. The package manager 247 may manage an installation or an update of an application that is distributed in the form of a package file.

The connectivity manager 248 may manage, for example, a wireless connection of Wi-Fi or Bluetooth. The notification manager 249 may display or notify events, such as an arrival message, an appointment, and a proximity notification in a manner that does not disturb the user. The location manager 250 may manage position information of the electronic device. The graphic manager 251 may manage a graphic effect to be provided to the user or a user interface associated therewith. The security manager 252 may provide all security functions required for system security, user authentication, and the like. According to an embodiment of the present disclosure, in a case where an electronic device (e.g., the electronic device 101) includes a phone function, the middleware 230 may include a telephony manager to manage a voice or video call function of the electronic device.

The middleware 230 may include a middleware module that forms a combination of various functions of the above-described elements. The middleware 230 may provide a module that is specialized for each kind of operation system in order to provide differentiated functions. In addition, the middleware 230 may dynamically delete some of the existing elements or add new elements.

The API 260 (e.g., the API 145) is, for example, a collection of API programming functions, and may be provided in different configurations according to operating systems. For example, Android or iOS may provide one API set for each platform and Tizen may provide two or more API sets for each platform.

The applications 270 (e.g., the applications 147) may include, for example, one or more applications that can execute the functions of home 271, dialer 272, short message service (SMS)/multimedia message service (MMS) 273, instant message (IM) 274, browser 275, camera 276, alarm 277, contact 278, voice dial 279, e-mail 280, calendar 281, media player 282, album 283, and clock 284, health care (e.g., measurement of a quantity of motion, blood sugar, and the like), provision of environmental information (e.g., provision of atmospheric pressure, humidity, temperature information, etc.).

According to an embodiment of the present disclosure, the applications 270 may include an application that supports information exchange between the electronic device (e.g., the electronic device 101) and the external electronic devices (e.g., the external electronic devices 102 and 104) (hereinafter, the application will be referred to as an "information exchange application" for the convenience of description). The information exchange application may include, for example, a notification relay application to transmit specific information to the external electronic devices, or a device management application to manage the external electronic devices.

For example, the notification relay application may include a function of relaying notification information generated from any other application of the electronic device (e.g., an SMS/MMS application, an e-mail application, a healthcare application, or an environment information application) to the external electronic devices (e.g., the external electronic devices 102 and 104). In addition, the notification relay application may receive notification information from, for example, an external electronic device, and may provide the notification information to a user.

The device management application may manage (e.g., install, delete, and update) at least one function of an external electronic device (e.g., the external electronic device 102 or 104) that communicates with the electronic device (e.g., turn-on/turn-off the external electronic device itself (or some components thereof) or adjustment of brightness (or resolution) of a display), an application operated in the external electronic device, or a service provided by the external electronic device (e.g., a telephony service or a message service).

According to an embodiment of the present disclosure, the applications 270 may include an application (e.g., a healthcare application of a mobile medical device) designated according to an attribute of an external electronic device (e.g., the external electronic device 102 or 104). According to an embodiment of the present disclosure, the applications 270 may include an application received from an external electronic device (e.g., the server 106 or the external electronic device 102 or 104). According to an embodiment of the present disclosure, the applications 270 may include a preloaded application or a third party application that is capable of being downloaded from the server. The names of the components of the program module 210 according to the illustrated embodiment may vary according to the kinds of operating systems.

According to various embodiments of the present disclosure, at least a part of the program module 210 may be implemented by software, firmware, hardware, or a combination two or more of these. At least a part of the program module 210 may be implemented by, for example, a processor (e.g., the processor 120). At least a part of the program module 210 may include, for example, a module, a program, a routine, instruction sets, or a process to perform one or more functions.

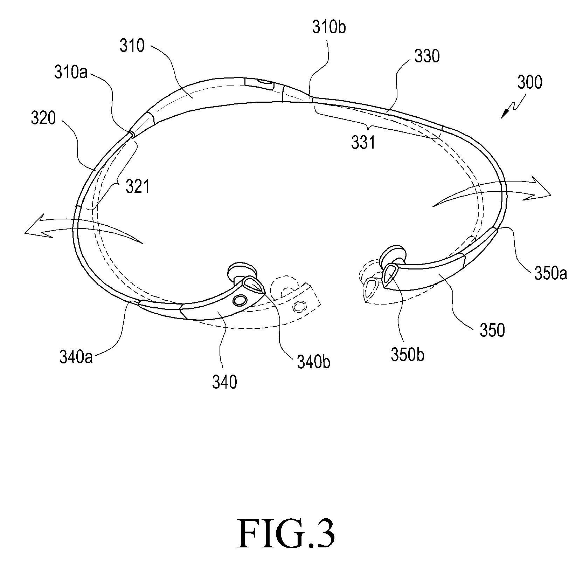

FIG. 3 is a view illustrating an electronic device according to various embodiments of the present disclosure.

Referring to FIG. 3, an electronic device 300 may include a main body 310, a first strap 320, a second strap 330, a first earbud 340, and a second earbud 350. Hereinafter, descriptions will be made with reference to a necklace-like earphone. However, the present disclosure is not limited thereto, and may be applied to all the wearable electronic devices that include a flexibly configured connection part.

The main body 310 may include a processor to control the operations of the electronic device 300. In addition, the main body 310 may be disposed between the first earbud 340 and the second earbud 350, and may include various components required for driving the electronic device 300, such as a vibration motor and a battery.

The first earbud 340 and the second earbud 350 may be connected with the main body 310 through the first strap 320 and the second strap 330, respectively. The straps are an embodiment of a connection part that connects each portion of the electronic device, and may be one type of a flexible connection part that connects each portion of the electronic device. In order to reduce the mobility of the straps, the straps may include at least one member that is configured to be adjusted and/or maintain the shape of the straps as the connection part described above with reference to FIG. 1. A current may be applied to the at least one member in order to reduce the mobility of the straps. When current is applied, the at least one member may be contracted in a set direction to adjust a bent state of the connection part such that mobility of the straps is reduced.

In addition, since the main body 310 includes the processor and various electronic components for the operations of the electronic device 300, the weight of the main body 310 may occupy a high proportion of the entire weight of the electronic device 300. Accordingly, when the electronic device 300 is worn, the weight center of the electronic device 300 may be formed at the main body 310 side. When the electronic device 300 is formed such that its weight center is biased to one side, it is highly probable that the electronic device 300 may become separated from the user's body. Accordingly, as the at least one member is included in the straps, the weight center of the electronic device 300 may be shifted without being biased to one side. For example, in a case where the user wears a necklace-like earphone, the main body 310 may be positioned at the rear side of the neck so that the weight center of the electronic device 300 may be formed at the rear side of the neck. When the at least one member is included in the straps in such a necklace-like earphone, the weight center of the necklace-like earphone may be shifted to the front side of the neck.

According to an embodiment of the present disclosure, the straps may interconnect respective portions of the electronic device, or may be connected to the main body of an electronic device, as in a smart watch, smart eyeglasses, or the like. Alternatively, as in a smart watch, each of the straps may be connected to each other via a separate connection structure.

The processor may confirm whether the first strap 320 and the second strap 330 are bent, and may apply a current to a first member included in at least one area 321 or 331 of each of the first strap 320 and the second strap 330 in order to reduce mobility of the first strap 320 and the second strap 330.

The member may be included in the entire areas of the first strap 320 and the second strap 330, and may be included in the at least one area 321 or 331, as illustrated in FIG. 3. Hereinafter, descriptions will be made on a case in which the member is included in the at least one area 321 or 331, but the present disclosure is not limited thereto. The length of the at least one area 321 or 331 may be differently set depending on the type, characteristics, or the like of the electronic device 300. In addition, the member may be inserted into the entire areas of the straps according to the type or characteristics of the electronic device 300.

For example, the user may apply an external force to the first strap 320 and the second strap 330 toward the outside as indicated by arrows in order to wear the electronic device 300, and as a result, the first strap 320 and the second strap 330 may be bent. The processor may confirm whether the first strap 320 and the second strap 330 are bent, and may determine that the user wears the electronic device 300 when the first strap 320 and the second strap 330 are bent.

In each of the first strap 320 and the second strap 330, a sensor may be included in order to confirm whether each of the straps is bent. The sensor may be included in the at least one area 321 or 331 of each of the first strap and the second strap. In addition, the sensor may also be included in the entire area of the first strap 320 and the second strap 330, and may be included in the at least one area 321 or 331, as illustrated in FIG. 3. Hereinafter, descriptions will be described with reference to a case in which the sensor is included in the at least one area 321 or 331, but the present disclosure is not limited thereto. The length of the at least one area 321 or 331 may be differently set according to the type and characteristics of the electronic device 300. In addition, the sensor may be inserted over the entire area of the straps according to the type, characteristics, or the like of the electronic device 300.

The sensor may include a resistor of which the resistance varies according to a bent angle of the sensor. In such a case, when external force is applied to each of the first strap 320 and the second strap 330 in the directions indicated by the arrows, the resistor may be gradually unbent from the bent state so that the resistance may decrease. In addition, when the applied external force is removed, the first strap 320 and the second strap 330 may be returned to the original shapes thereof, and thus the resistor returns to its original bent state so that the resistance may increase. The processor may confirm whether the first strap 320 and the second strap 330 are bent through a voltage measured through the resistor. For example, the processor may sense a change in resistance of the resistor so as to detect the bending operation of each strap.

For example, as the resistance increases, the voltage measured through the resistor may increase, and as the resistance decreases, the voltage measured through the resistor may decrease. Accordingly, the processor may confirm whether each strap is bent by comparing the voltage sensed through the resistor to a set threshold.

According to an embodiment of the present disclosure, when it is confirmed that the first strap 320 and the second strap 330 are bent, the processor may determine that the user uses or wears the electronic device. When it is determined that the user wears the electronic device, the processor may apply a current to the member that is included in each of the first strap 320 and the second strap 330 in order to reduce the mobility of the first strap 320 and the second strap 330.

Each of the first earbud 340 and the second earbud 350 may include an audio module so as to receive audio data from the main body 310 and output the audio data. The user may separate the first earbud 340 and the second earbud 350 from each other, and may place the first earbud 340 and the second earbud 350 adjacent to the ears so as to confirm the output audio data (e.g., sound source data or voice call data).

Each of the first earbud 340 and the second earbud 350 may include a first end 340a or 350a and a second end 340b or 350b. The first end 340a of the first earbud 340 may be connected to a first end 310a of the main body 310 through the first strap 320. In addition, the first end 350a of the second earbud 350 may be connected to the second end 310b of the main body 310 through the second strap 330.

According to various embodiments of the present disclosure, the first earbud 340 and the second earbud 350 may include various user interfaces (e.g., a physical button or a touch button) and may also include various sensors. The sensors may collect connection or disconnection information of the first earbud 340 and the second earbud 350 and may collect information related to a movement or an operation of the electronic device 300.

The first strap 320 may electrically interconnect the first earbud 340 and the main body 310, and the second strap 330 may electrically interconnect the second earbud 350 and the main body 310. In addition, when the first earbud 340 and the second earbud 350 are placed adjacent to a user's ears, respectively, the first strap 320 and the second strap 330 may be flexibly bent. The first strap 320 and the second strap 330 may be housed in a material that is less rigid than the main body 310, the first earbud 340, or the second earbud 350.

According to various embodiments of the present disclosure, the main body 310, the first earbud 340, and the second earbud 350 may maintain a curved shape so that the user may easily wear them. In addition, the first strap 320 and the second strap 330 may also be configured to have a predetermined curvature radius so that the user may comfortably and easily wear them.

The second end 340b of the first earbud 340 and the second end 350b of the second earbud 350 may be connected with or disconnected from each other. The second end 340b of the first earbud 340 and the second end 350b of the second earbud 350 may be implemented to have corresponding cross-sectional shapes, respectively. The user may disconnect the second end 340b of the first earbud 340 from the second end 350b of the second earbud 350 or may connect the second end 340b of the first earbud 340 with the second end 350b of the second earbud 350 (hereinafter, referred to as "disconnection or connection of the first earbud 340 and the second earbud 350) so as to wear the electronic device 300 or so as to hang the electronic device 300 on an object, such as a bag or a desk.

According to various embodiments of the present disclosure, information related to the disconnection or connection of the first earbud 340 and the second earbud 350, information related to a position or a state of each earbud, and the like may be detected through various sensors. The information may be used for determining whether to apply a current in order to reduce mobility of the first strap 320 and the second strap 330. In addition, the information may be interlocked with an external device of the electronic device 300 and may be utilized for controlling various functions that are supported by the electronic device 300, such as a phone call connection, schedule notification, and sound source reproduction.

According to various embodiments of the present disclosure, the first earbud 340 and the second earbud 350 may be connected to or disconnected from each other through a magnetic force of a magnet. Each of the first earbud 340 and the second earbud 350 may include a sensor (e.g., a hole sensor) which may detect a magnetic field generated from the magnet. The information detected by the sensor may be used in order to confirm whether the first earbud 340 and the second earbud 350 are connected to or disconnected from each other.

According to various embodiments of the present disclosure, each of the first earbud 340 and the second earbud 350 may include an audio module. The audio module may be covered with an ear tip. The user may disconnect the first earbud 340 and the second earbud 350 from each other, and may insert the first earbud 340 and the second earbud 350 into the user's ears, respectively, so as to utilize various functions, such as a phone call connection and sound source reproduction.

According to an embodiment of the present disclosure, since the first earbud 340 and the second earbud 350 may be disconnected from each other in order to use the electronic device 300, the time point in which the first earbud 340 and the second earbud 350 are disconnected from each other may be used as a time point in which the current is applied in order to reduce the mobility of the first strap 320 and the second strap 330.

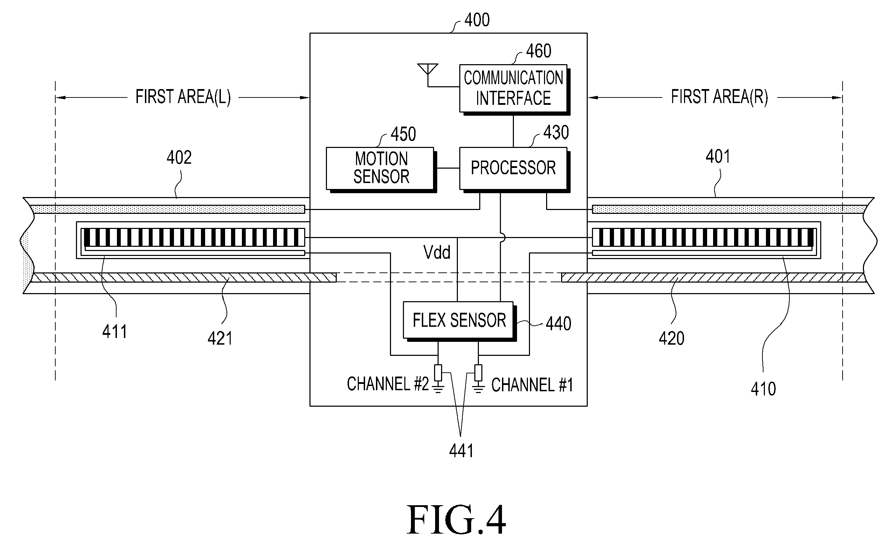

FIG. 4 illustrates a structure of an electronic device according to various embodiments of the present disclosure.

FIG. 4 illustrates a structure of a body 400, a first strap 401, and a second strap 402, which are included in the electronic device 101. The body 400 may include a processor 430, a flex sensor 440, a distribution resistor 441, a motion sensor 450, and a communication interface 460.

Referring to FIG. 4, each of the first strap 401 and the second strap 402 may include a sensor 410 or 411 that detects whether each strap is bent, and first members 420 and 421, each of which may be contracted in a first direction when a current is applied thereto, so as to adjust the bent state of the straps, respectively.

The sensors 410 and 411 and the first members 420 and 421 may be arranged in set areas of the straps, respectively. In addition, the sensors 410 and 411 may be fabricated to be shorter than the lengths of the first members 420 and 421, respectively. For example, the sensor 410 and the first member 420 may be arranged in a first area R of the first strap 401, and the sensor 411 and the first member 421 may be arranged in a first area L of the second strap 402. According to the characteristics of the electronic device 101, the length of the first area R and the length of the first area L may be set to be equal to or different from each other.

The first members 420 and 421 may be bent in the left and right directions or may be bent in the left and right, and up and down directions. Alternatively, the first members 420 and 421 may be configured in a single form through the body 400. Alternatively, the first members 420 and 421 may be configured in the form of being separated by the left and right with reference to the body 400. The first members 420 and 421 are inserted into the body 400 to be adjacent to each other, and when a current is applied thereto, the first members 420 and 421 may be contracted in a set direction so that the bent states of the first strap 401 and the second strap 402 may be adjusted. Alternatively, since the first members 420 and 421 may be inserted into the body 400, the weight center that is biased to the body 400 may be shifted. Through this, it is possible to prevent the electronic device 101 from being separated from the user's body.

The flex sensor 440 may sense a voltage that is applied to the sensors 410 and 411. Each of the sensors 410 and 411 may include one power input channel and one power output channel, and the output channel may be connected with the distribution resistor 441 and the flex sensor 440. For example, the output channel may be connected to the distribution resistor 441 in parallel, and may be connected to the flex sensor 440 in series. The flex sensor 440 may sense a voltage applied to the sensors 410 and 411 by using the distribution resistor 441. The flex sensor 440 may be included in the processor 430, or may exist as a separate component, as illustrated in FIG. 4.

The processor 430 may confirm whether the first strap 401 and the second strap 402 are bent based on the voltage sensed through the flex sensor 440. When it is confirmed that the first strap 401 and the second strap 402 are bent, the processor 430 may apply a current to the first members 420 and 421. When the current is applied, the first members 420 and 421 may be contracted in a set direction and may maintain the bent state so that the mobility of the first strap 401 may decrease.

The motion sensor 450 may be used for determining whether the user wears the electronic device 101, and may detect an operation of the electronic device 101 together with the flex sensor 440. The processor 430 may control a function of the electronic device 101 according to the detected operation.

The processor 430 may determine whether the electronic device is being used based on a value sensed through the motion sensor 450. For example, in the case where the electronic device 101 is a necklace-like earphone, the processor 430 may determine whether the necklace-like earphone is in a hung state or in a worn state based on a value sensed through the motion sensor 450. In addition, the processor 430 may determine whether a necklace-like earphone is in a normally hung state or in an abnormally inverted state based on the value sensed through the motion sensor 450 so as to control the audio channel of the necklace-like earphone or to limit the audio output of the necklace-like earphone.

In addition, the processor 430 may perform communication with an external device by using the communication interface 460, or may be interlocked with the external device so as to control the electronic device 101.

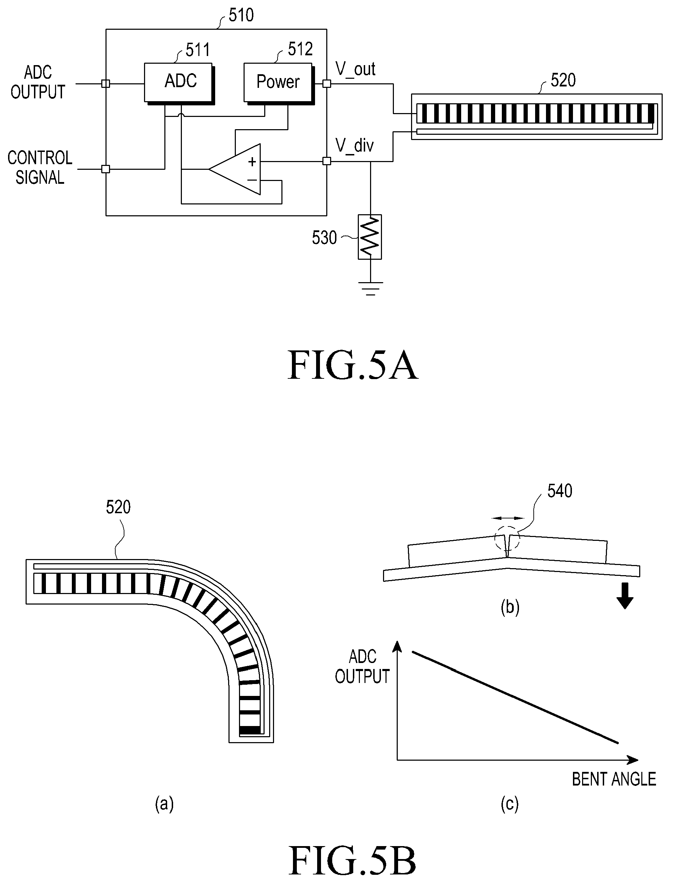

FIGS. 5A and 5B are views for describing a flex sensor according to various embodiments of the present disclosure and operations thereof.

FIG. 5A illustrates a block diagram showing a configuration of a flex sensor 510 according to various embodiments of the present disclosure.

Referring to FIG. 5A, the flex sensor 510 may include an analog-digital-converter (ADC) 511 that measures a voltage applied to a resistor 520 of which the resistance varies according to a bent angle or a bending degree, and a power supply 512 that applies a voltage to the resistor 520. The flex sensor 510 may apply a predetermined voltage to the resistor 520 through the power supply 512, and may measure a voltage applied to the resistor 520 by using the resistor 520 and a distribution resistor 530.

The resistor 520 may be segmented into a plurality of areas. The gaps between the plurality of segmented areas may be referred to as micro cracks. When an area of the strap that corresponds to the resistor 520 is bent by an external force, the resistor 520 may also be bent. When the resistor 520 is bent, the gaps between the plurality of segmented areas that correspond to the bent area (in other words, the micro cracks) may be widened. When the micro cracks become widened, resistance of the resistor increases so that the voltage applied to the resistor 520 may increase. Accordingly, the voltage applied to the distribution resistor 530 may decrease. In this way, the flex sensor 510 may measure the voltage applied to the resistor 520 of which the resistance varies according to the bending degree. The electronic device 101 may confirm the bent state of the strap area, in which the resistor 520 is placed, by using the voltage measured through the flex sensor 510.

FIG. 5B is a view for describing a resistance variation characteristic of the resistor 520.

Referring to FIG. 5B, the resistor 520 may be segmented into a plurality of areas, and gaps between the plurality of segmented areas may be referred to as micro cracks 540. Because the resistor 520 is segmented into a plurality of areas, the resistor 520 may be bent when an external force acts thereon.

In a case where external force acts in a direction indicated by the arrow in FIG. 5B, the micro cracks 540 between the plurality of segmented areas, which correspond to the area that is bent as the external force acts thereon, may be widened. In other words, the micro cracks 540 - the gaps between the plurality of areas - may be widened, and as a result, the resistance of the resistor 520 may increase. When the resistance of the resistor 520 increases, the voltage applied to the resistor 520 may increase according to a voltage distribution law and the voltage applied to the distribution resistor 530 may decrease.

A graph illustrated in FIG. 5B represents a resistance characteristic of the resistor 520. In the graph, the x-axis represents a bent angle (bending degree), and the y-axis represents an ADC output that indicates the voltage applied to the resistor 520. Referring to the circuit diagram of FIG. 5A, the ADC output may indicate the voltage applied to the distribution resistor 530.

When the bent angle corresponding to the x-axis increases, the micro cracks 540 may be widened. When the micro cracks 540 are widened, the resistance of the resistor 520 may increase and the voltage applied to the distribution resistor 530 may decrease according to the voltage distribution law. Accordingly, as the bent angle corresponding to the x-axis increases, the ADC output corresponding to the y-axis may decrease. Accordingly, the resistance characteristic of the resistor 520 may be represented as the graph illustrated in FIG. 5B.

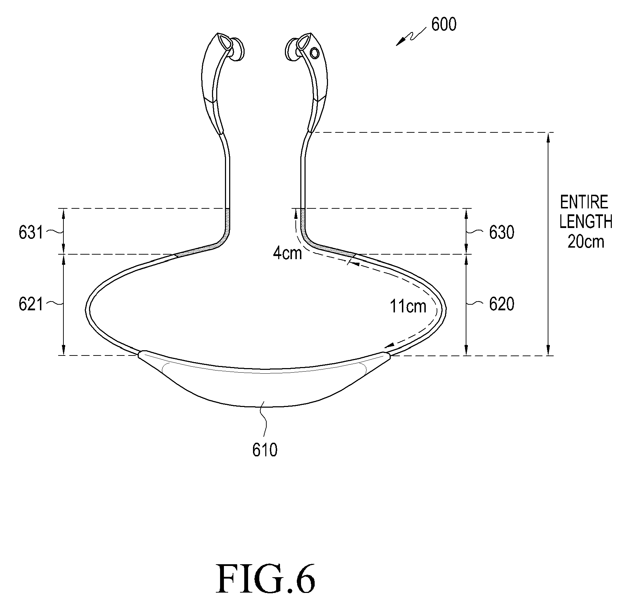

FIG. 6 illustrates an electronic device 600 according to various embodiments of the present disclosure.

Referring to FIG. 6, the electronic device 600 may include a main body 610, and straps that interconnect the main body 610 and earbuds, respectively. Each of the straps may include a first sensor that confirms whether a first area 620 or 621 is bent, and a first member that adjusts the bent state of the first area. In addition, each of the straps may include a second sensor that confirms whether a second area 630 or 631 is bent, and a second member that adjusts the bent state of the second area. Hereinafter, the electronic device 600 is described assuming that the electronic device 600 includes both the first member and the second member, but is not limited thereto. As illustrated in FIG. 3, the electronic device 101 may include only the first member, and although not illustrated, the electronic device 101 may include only the second member. According to the type or characteristics of the electronic device 101, at least one of the first member and the second member may be included in a strap so as to prevent the electronic device 101 from being separated from the user's body. In addition, in order to prevent the electronic device 101 from being separated from the user's body, at least one member other than the first member and the second member may be included in the strap.

Unlike FIG. 3, each strap of the electronic device 600 may include both the first member and the second member. Both the first member and the second member may adjust the bent state of the strap in order to reduce the mobility of the strap. For example, as current is applied, the first member and the second member may become contracted and maintain the contracted bent state so that the mobility of the strap may be reduced. Through this, it is possible to prevent the electronic device 600 from being separated from the user's body.

The first area 620 or 621 and the second area 630 or 631 may be the areas that are differentiated from each other, as illustrated in FIG. 6, but may alternatively overlap with each other although not illustrated that way.

The second areas 630 and 631 may require a larger tension when compared to the first areas 620 and 621 in order to reduce the mobility of the straps. Accordingly, in general, the second areas 630 and 631 may be set to be shorter than the first areas 620 and 621. For example, FIG. 6 illustrates that the length of the first areas 620 and 621 is 11 cm and that the length of the second areas 630 and 631 is 4 cm, in a case where the entire length of each strap is 20 cm. However, this is merely an example for the purpose of description and the present disclosure is not limited thereto. According to the characteristics, type, or the like of the electronic device 600, the second areas may be set to be longer than the first areas.

The first members and the second members may be made of a shape memory material. In addition, the first members and the second members may be configured such that when a current is applied thereto, they are contracted in a set direction and when the current is interrupted, the contracted portions are expanded again. In order to secure a larger tension, the first members or the second members may be manufacture in a mesh form.

In addition, the first sensors and the second sensors - sensors to confirm whether the first areas 620 and 621 and the second areas 630 and 631 are bent or to confirm a bent state - may be arranged to be orthogonal to each other. Bending in all directions may be sensed in one area. However, in such a case, the number of sensors to be used for confirming the bending direction (for example, the number of resistors of which the resistance varies according to, for example, a bending degree) may increase. When the number of sensors increases, the thickness of the strap, in which the sensors are included, may increase. In order to prevent this, the first sensors and the second sensors may be arranged to be orthogonal to each other to confirm different directions in respective areas.

The processor included in the main body 610 may confirm whether the first areas and the second areas are bent by using the first sensors and the second sensors, respectively. For example, the processor may compare the bent angles of the first areas and the second areas, which are measured through the first sensors and the second sensors, respectively, with a set threshold so as to confirm whether the first areas and the second areas are bent.

When the bending of the first areas and the second areas is confirmed, the processor may apply a current to the first members and the second members. The processor may reduce the mobility of the straps by adjusting and maintaining the bent states of the straps by applying the current to the first members and the second members.

In addition, the processor may confirm the bending directions of the first areas and the second areas, and may control a function of the electronic device 600 based on the confirmed bending directions. For example, the bending directions of the first areas and the second areas may be used as a means for gesture recognition.

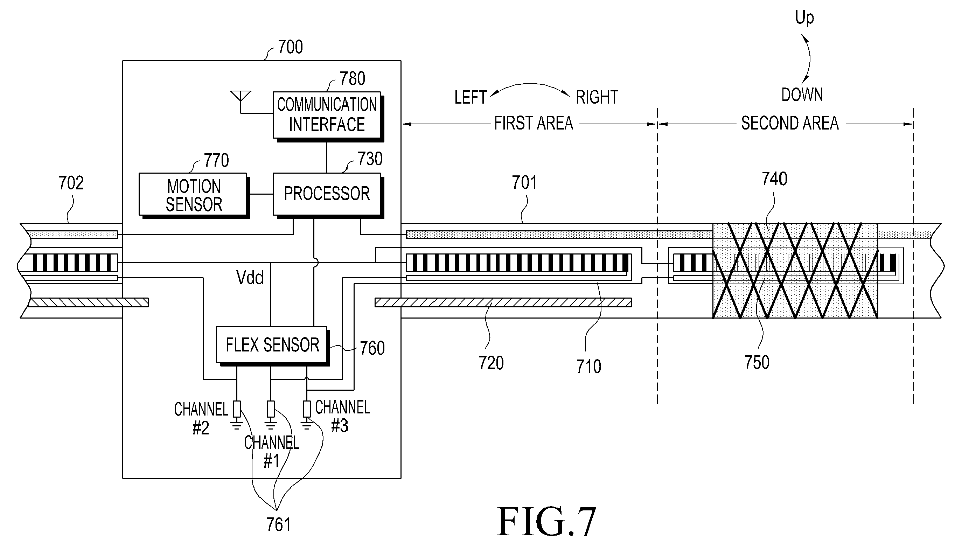

FIG. 7 illustrates a configuration of an electronic device according to various embodiments of the present disclosure.

FIG. 7 illustrates a configuration of a body 700, a first strap 701, and a second strap 702 that are included in an electronic device, e.g., the electronic device 101. The body 700 may include a processor 730, a flex sensor 760, a distribution resistor 761, a motion sensor 770, and a communication interface 780. Because the second strap 702 has the same configuration as the first strap 701, a separate description thereof will be omitted.

The first strap 701 may include, in a first area, a first sensor 710 that detects whether the first area is bent and a first member 720 that adjusts the bent state of the first area. In addition, the first strap 701 may include, in a second area, a second sensor 750 that detects whether the second area is bent and a second member 740 that adjusts the bent state of the second area.

The first member 720 and the second member 740 may include a shape memory material so that when a current is applied thereto, the first member 720 and the second member 740 are contracted, and when the current is interrupted, the contracted portions are expanded so as to adjust the bent states of the first area and the second area. Alternatively, the first member 720 and the second member 740 may maintain the bent angles and the bending directions constantly such that the bent states can be maintained. The second member may be manufactured in a mesh form as illustrated in FIG. 7 in order to secure a larger tension.

The first sensor 710 and the second sensor 750 may include a resistor of which the resistance varies according to the bending degree. By measuring the voltage applied to the resistor, it is possible to confirm whether the first area and the second area are bent. In addition, the first sensor 710 and the second sensor 750 may be arranged to be orthogonal to each other. Accordingly, the bending directions, which are confirmed by the first sensor 710 and the second sensor 750, respectively, may be different from each other. For example, the left and right bending directions may be confirmed through the first sensor, and the upper and lower bending directions may be confirmed through the second sensor. The first sensor and the second sensor may be arranged in various forms in consideration of the bent direction of the strap according to the characteristics, type, or the like of the electronic device 101.

The flex sensor 760 may sense a voltage applied to the first sensor 710 and the second sensor 750. The flex sensor 760 may sense the voltage applied to the first sensor 710 and the second sensor 750 by using the distribution resistor 761 that is connected to each of the first sensor 710 and the second sensor 750. The flex sensor 760 may be included in the processor 730, or may exist as a separate component.

The processor 730 may confirm whether the first area and the second area are bent based on the voltage sensed through the flex sensor 760. When the bending of the first area and the second area is confirmed, the processor 730 may apply a current to the first member 720 and the second member 740. When the current is applied, the first member 720 and the second member 740 may be contracted in a set direction, and the mobility of the first strap 701 may be reduced by maintaining the contracted bent state.

The motion sensor 770 may be used for determining whether the user wears the electronic device 101, and may detect the operation of the electronic device 101 together with the flex sensor 760. According to the detected operation, the processor 730 may control a function of the electronic device 101.

In addition, the processor 730 may perform communication with an external device by using the communication interface 780 or may be interlocked to the external device so as to control the electronic device 101.

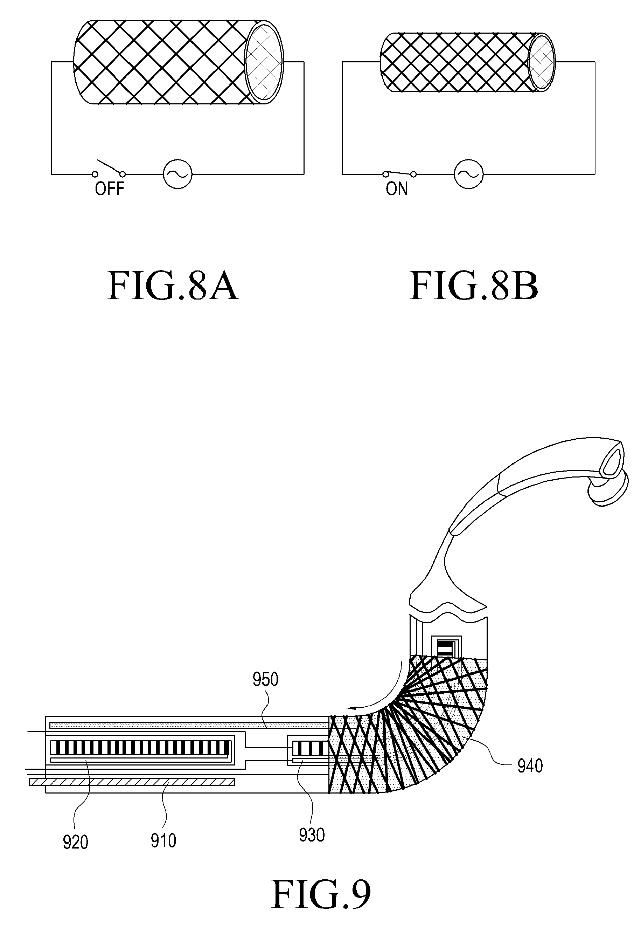

FIGS. 8A and 8B are views for describing a characteristic of a member that adjusts the bending of a strap of an electronic device according to various embodiments of the present disclosure.

Referring to FIGS. 8A and 8B, according to an embodiment of the present disclosure, a predetermined area of the strap may require a larger tension as compared to another area in order to reduce mobility. Accordingly, a member that is inserted into the predetermined area may be manufactured in a mesh form.

For example, as illustrated in FIG. 8A, when a current is not applied to the member manufactured in the mesh form, the member may be maintained in an expanded form. On the contrary, as illustrated in FIG. 8B, when a current is applied to the member manufactured in the mesh form, for example, each string that forms the mesh tends to recover its original shape, and as a result, the mesh may be contracted.

Thereafter, when the current applied to the member manufactured in the mesh form is interrupted, each string that forms the mesh may be changed from the contracted state into the expanded state as illustrated in FIG. 8A.

FIG. 9 illustrates a configuration of a strap of an electronic device according to various embodiments of the present disclosure.

The configuration of the strap will be described in more detail with reference to FIG. 9.

Referring to FIG. 9, the electronic device 101 may confirm whether a first area in which a first sensor 920 is arranged and a second area in which a second sensor 930 is arranged are bent by using the first sensor 920 and the second sensor 930, respectively. When the bending of the first area and the second area is confirmed, the electronic device 101 may apply a current to a first member 910 and a second member 940 that is in a mesh form.

When current is applied to the first member 910 and the second member 940, the first member 910 and the second member 940 may be contracted in a set direction. For example, in the case where the first member 910 and the second member 940 are formed of a shape memory material, the first member 910 and the second member 940 may be manufactured to be contracted in the set direction by using the nature that causes the first member 910 and the second member 940 to be switched to the original shapes thereof as a current is applied thereto.

Alternatively, in order to prevent a power line 950, which supplies power to an earbud according to the contraction directions of the first member 910 and the second member 940, from being subjected to expansion stresses, the power line 950 may be arranged to correspond to the contraction directions of the first member 910 and the second member 940.

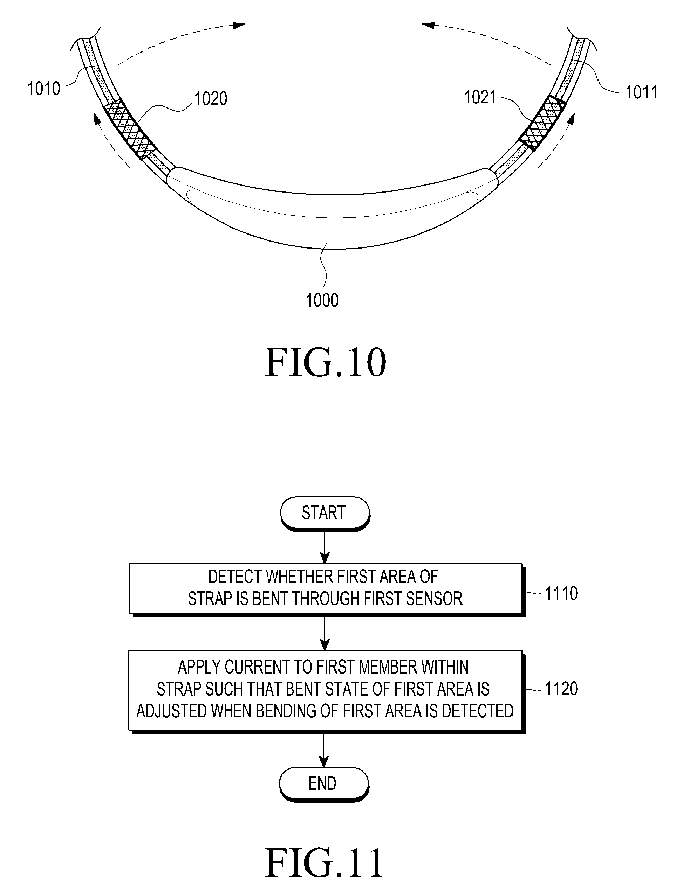

FIG. 10 illustrates an electronic device in which a first member and a second member are included according to various embodiments of the present disclosure.

FIG. 10 illustrates a case in which each first area, into which a first member 1010 or 1011 is inserted, includes a second area, into which a second member 1020 or 1021 is inserted.

Referring to FIG. 10, according to the characteristics of the electronic device 101, an area to be bent in a second direction different from a first direction, in which the first area is bent, may exist within the first area. In this case, with respect to the area to be bent in the second direction, the bent state may be adjusted by using the second member 1020 or 1021 separately from the first member 1010 or 1011 that adjusts the bent state of the first area.

Even if the second area is included within the first area, the processor including the main body 1000 may differentially confirm the bent states of the first area and the second area. Because the bending directions of the first area and the second area may be different from each other, the bent states of the first area and the second area may be differentially confirmed in consideration of the bending directions.

According to an embodiment of the present disclosure, the second areas may be manufactured in a mesh form because the second areas require a larger tension in order to reduce the mobility. When the shapes of the first member 1010 or 1011 and the second member 1020 or 1021 are different from each other, the second member may be disposed on the first member in the area where the first area and the second area overlap with each other.

According to an embodiment of the present disclosure, in a case where the shapes of the first member 1010 or 1011 and the second member 1020 or 1021 are equal to each other, the second member 1020 or 1021 may be disposed in place of the first member 1010 or 1011 in the area where the first area and the second area overlap with each other.

FIG. 11 is a flow chart of a method of adjusting a bent state of a strap of an electronic device according to various embodiments of the present disclosure.

Referring to FIG. 11, in operation 1110, through a first sensor within a first area of a strap connected to the body that includes the processor, the electronic device 101 may detect whether the first area of the strap is bent. The first area may be at least a part of the strap which is set in order to prevent the electronic device 101 from being separated from the user's body. For example, the first area may be set to be arranged within a set length from the body.

In operation 1120, when the bending of the first area is detected, the electronic device 101 may apply a current to the first member arranged within the first area so that the bent state of the first area is adjusted. When the current is applied, the first member is contracted in a first direction so that the bent state of the first area can be adjusted.

In this way, when the bending of the first area is detected, the electronic device 101 may adjust the bent state of the first area such that the electronic device 101 cannot be separated from the user's body by applying the current to the first member.

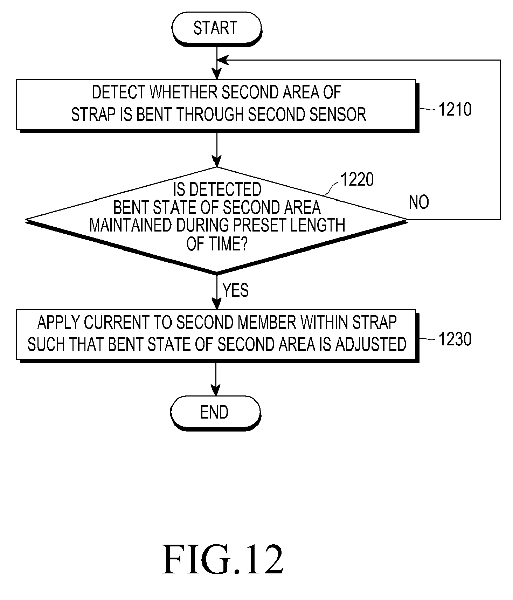

FIG. 12 is a flowchart of a method of adjusting a bent state of a strap of an electronic device according to various embodiments of the present disclosure.

Referring to FIG. 12, in operation 1210, through a second sensor within a second area of a strap connected to the body that is included in the processor, the electronic device 101 may detect whether the second area of the strap is bent. As described above, the second area may be an area that is different from the first area in a bent state and thus requires a larger tension in order to reduce mobility.

At least a part of the second area may be included in the first area. For example, a portion that requires a larger tension in order to reduce mobility may also exist within the first area. Thus, a part of the second area may be included in the first area. In this case, the second member may be arranged on the first member, and the first member may be arranged in place of the first member in the area where the first area and the second area overlap with each other.

In operation 1220, the electronic device 101 may determine whether the detected bent state of the second area is maintained for a selected length of time. When the detected bent state of the second area is not maintained for a selected length of time, the electronic device 101 may return to operation 1210 and may detect again whether the second area is bent.

In operation 1230, when the detected bent state of the second area is maintained for the selected length of time, the electronic device 101 may apply a current to the second member such that the bent state of the second area is adjusted. The time point for applying the current to the second member in order to reduce the mobility of the second area may be either equal to or different from the time point for applying the current to the first member. The time point for reducing the mobility of the connection part may be variously set according to the characteristics, use, or the like of the electronic device 101.

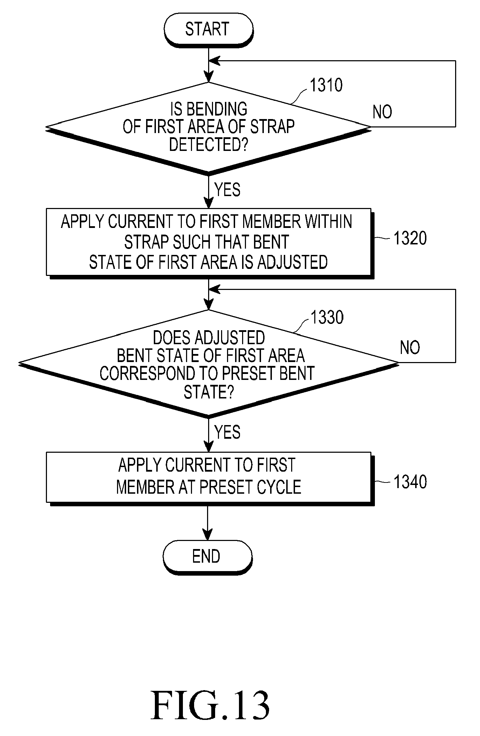

FIG. 13 is a flow chart of a method of applying a current in order to adjust a bent state of a strap of an electronic device according to various embodiments of the present disclosure.

Referring to FIG. 13, in operation 1310, the electronic device 101 may detect whether a first area of a strap connected to the body that includes the processor is bent. The electronic device 101 may detect the bent state of the first area (for example, a bent angle) and may compare the detected bent angle with a set threshold. As the result of comparison, when the bent angle is equal to or larger than the set threshold, the electronic device 101 may determine that the first area is bent. On the contrary, when the bent angle is less than the set threshold, the electronic device 101 may determine that the first area is not bent.

In operation 1320, when the bending of the first area is detected, the electronic device 101 may apply a current to the first member arranged in the first area such that the bent state of the first area is adjusted. When the current is applied, the first member may be contracted in a set first direction to adjust the bent state of the first area.

In operation 1330, the electronic device 101 may confirm whether the bent state of the first area, which is adjusted as the first current is applied, corresponds to a set bent state. The electronic device 101 may confirm the bent state of the first area, which is adjusted when the current is applied, through the first sensor arranged in the first area.

In operation 1340, when the adjusted bent state of the first area corresponds to the set bent state, the electronic device 101 may apply a current to the first member at a set cycle such that the bent state of the first area is maintained at the set bent state. For example, when the current applying cycle is short, the first member may be continuously contracted, and when the current applying cycle is long, the contracted portion may be expanded again. In addition, when the current is applied at the set cycle, the first member may be maintained at the set bent state without being contracted any more. The set cycle may be set according to the characteristics of the first member.

When the adjusted bent state of the first area does not correspond to the set bent state, the electronic device 101 may continuously apply the current to the first member at the set cycle. In addition, the electronic device 101 may apply the current to the first member at a cycle that is shorter than the set cycle.

According to various embodiments of the present disclosure, there is a method of reducing a mobility of a strap by the electronic device 101. The method may include: detecting whether a first area of the strap is bent through a first sensor within the strap of the electronic device; and applying a current to the first member within the strap when it is detected that the first area is bent to adjust a bent state of the first area.

According to various embodiments of the present disclosure, the detecting of whether the first area of the strap is bent may include: detecting a change in resistance according to a bent angle of a resistor included in the first sensor; and detecting whether the first area is bent based on the detected change in resistance.

According to various embodiments of the present disclosure, the applying of the current to the first member within the strap may include: confirming the bent state of the first area by applying the current, through the first sensor; and applying, when the confirmed bent state of the first area corresponds to a selected bent state, the current to the first member on a first cycle that is selected so as to cause the bent state to be maintained at the selected bent state.

According to various embodiments of the present disclosure, the method may further include: detecting whether a second area of the strap is bent, through a second sensor within the strap; and applying, when a state in which the bending of the second area is detected is maintained for a selected length of time, the current to the second member within the strap to adjust the bent state of the second area.

According to various embodiments of the present disclosure, wherein the detecting of whether the second area is bent may include: detecting a change in resistance according to a bent angle of a resistor that is included in the second sensor; and detecting whether the second area is bent based on the detected change in resistance.

According to various embodiments of the present disclosure, the method may further include: controlling at least one function supported by the wearable electronic device, based on each of bending directions of the first area and the second area, which are detected through the first sensor and the second sensor, respectively.

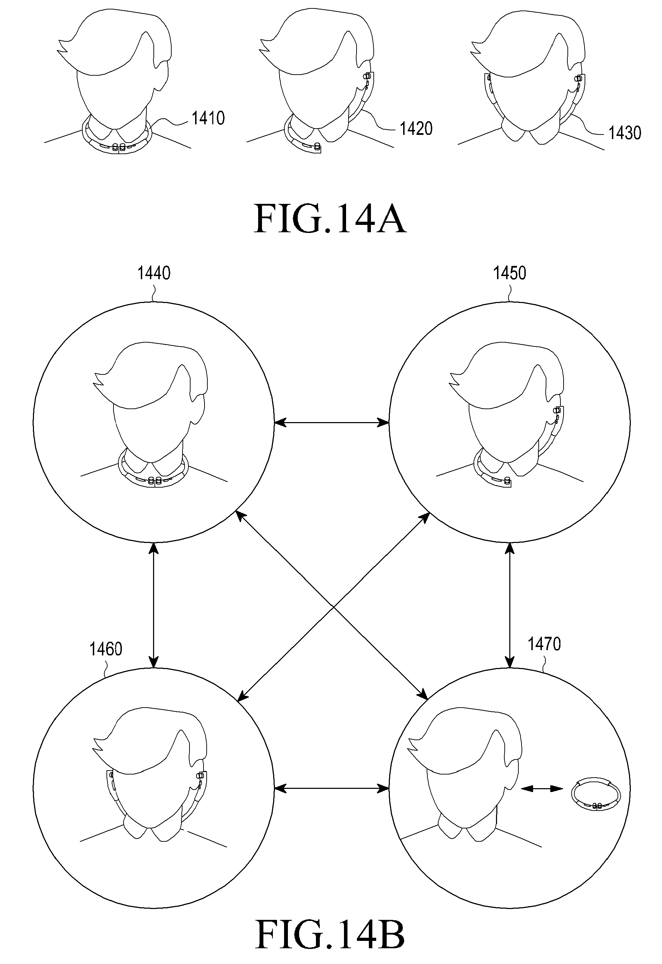

FIG. 14A is a view exemplifying worn states of an electronic device according to various embodiments of the present disclosure, and FIG. 14B is a view illustrating a state change of the electronic device according to various embodiments of the present disclosure.

In a case where the electronic device 101 is a necklace-like earphone, a head set, or an electronic necklace, the user may wear the electronic device 101 in the form of a necklace by connecting earbuds to each other.

Referring to FIG 14A, state 1410 illustrates a case in which the user currently wears the necklace-like earphone on the neck and connecting the earbuds to each other.

The electronic device 101 may include an acceleration sensor, a gyro sensor, a touch sensor, or the like in order to determine whether the user wears the electronic device. For example, based on a detection result of the acceleration sensor or the gyro sensor, the electronic device 101 may determine that the user wears the electronic device 101 when the tilt of the electronic device 101 is included within a set tilt range of the electronic device 101.

On the contrary, when the tilt of the electronic device 101 is not within the set tilt range, the electronic device 101 may determine that the user does not wear the electronic device 101.

Further to considering whether the straps connected to the earbuds are bent in addition to the sensing result of the acceleration sensor or the gyro sensor, the electronic device 101 may determine whether the electronic device 101 is worn by the user.

For example, when an external force acts on the straps and the bending of the straps is confirmed, it may be determined that the electronic device 101 is in the state where it is worn by the user. On the contrary, when the bending of the straps has not been confirmed for a set length of time, it may be determined that the electronic device 101 is in the state where it is not worn by the user.

When it is determined that the electronic device 101 is worn by the user, the electronic device 101 may activate a function that is provided by the electronic device 101, for example, a phone call connection or the like. On the contrary, when it is determined that the electronic device 101 is not worn by the user, the electronic device 101 may cause an operation, such as button locking or turn-off, to be performed.

The user may use both earbuds of the electronic device 101, or may use only one earbud. In FIG. 14A, state 1420 corresponds to a state in which the user uses only one earbud, state 1430 corresponds to a state in which the user uses both earbuds. The electronic device 101 may determine, through the bent states of the straps connected to the respective earbuds, whether the electronic device 101 is in state 1420 where the user uses only one earbud, or whether the electronic device 101 is in state 1430 where the user uses both earbuds.

For example, when the bending is confirmed from only one strap among the straps that are connected to both the respective earbuds, the electronic device 101 may determine that the electronic device 101 is in state 1420 where the user uses only one earbud. On the contrary, when the bending is confirmed from both straps that are connected to both earbuds, respectively, the electronic device 101 may determine that the electronic device 101 is in state 1430 where the user uses two earbuds.

The electronic device 101 may perform a control such that different functions may be executed depending on whether only one earbud is used or both earbuds are used. For example, in a case where the user uses only one earbud, the electronic device 101 may execute a phone call connection mode, or may perform a control such that a microphone module or an audio module of the earbud, which is confirmed as being used by the user, is operated. In addition, in a case where the user uses both earbuds, the electronic device 101 may execute a sound source reproduction mode, or may perform a control such that both the audio modules included in both earbuds are respectively operated.

FIG. 14B is a view illustrating a state change of the electronic device 101 according to the various embodiments of the present disclosure.

Referring to FIG. 14B, state 1440 corresponds to a state in which both earbuds of the electronic device 101 are connected to each other and the electronic device 101 is worn by the user. Based on the sensing result of the acceleration sensor, the gyro sensor, or the like, the electronic device 101 may determine whether the electronic device 101 is in a state where the electronic device 101 is worn by the user. In addition, considering whether the straps are bent, the electronic device 101 may determine whether the electronic device 101 is in a state where it is worn by the user.

In state 1440, the electronic device 101 may cause at least a part of the user interface to be disabled or deactivated. For example, the electronic device 101 may cause only some buttons (e.g., the power button and the phone call button) to be activated and other buttons (e.g., each of or some of the remaining buttons of the electronic device) to be deactivated.

State 1450 corresponds to a state in which the user uses only one earbud. The electronic device 101 may confirm the bent states of the straps that are connected to the earbuds, respectively, so as to determine whether the electronic device 101 is in a state where the user uses only one earbud.

When it is determined that the user uses only one earbud, the electronic device 101 may execute the phone call mode, or may perform a control such that only the audio module of the earbud that is confirmed as being used by the user is operated.

State 1460 corresponds to a state in which the user uses both earbuds. The electronic device 101 may confirm the bent states of the straps that are connected to the earbuds, respectively, so as to determine whether the electronic device 101 is in a state where the user uses both earbuds.

When the user uses both earbuds, the electronic device 101 may execute the sound source reproduction mode, and may perform a control such that both the audio modules that are respectively included in the opposite earbuds are operated.

State 1470 corresponds to a state in which the user does not wear the electronic device 101. Based on the sensing result of the acceleration sensor or the gyro sensor, the electronic device 101 may determine whether the electronic device 101 is in a state where it is not worn by the user. In addition, considering whether the straps are bent, the electronic device 101 may determine whether the electronic device 101 is in a state where it is not worn by the user.

When it is determined that the electronic device 101 is not worn by the user, the electronic device 101 may perform an operation such as button locking or turn-off.

States 1440 to 1470 may be switched from one to another, and the electronic device 101 may confirm state switching so as to perform an operation corresponding to the confirmed state.

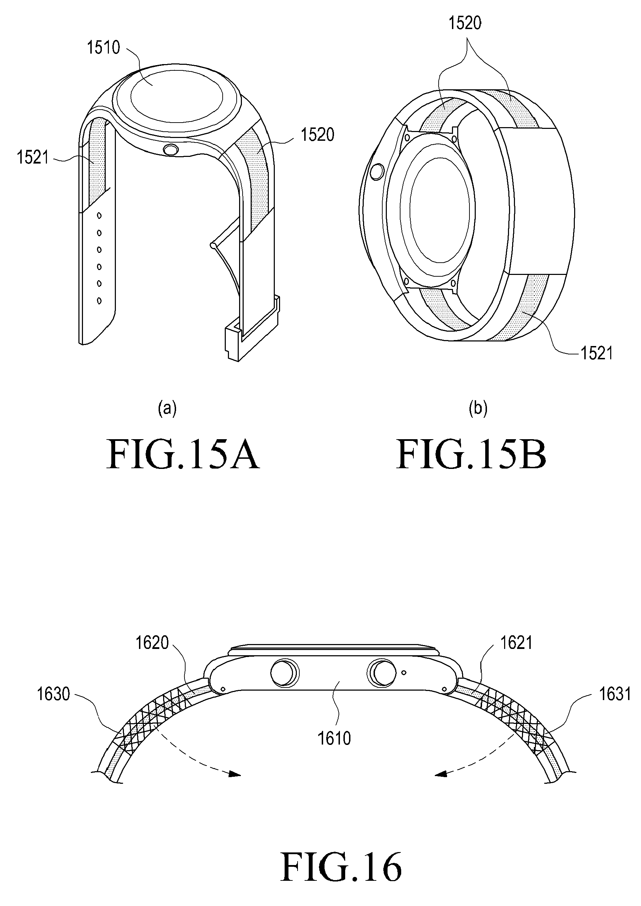

FIGS. 15A and 15B illustrate a smart watch according to various embodiments of the present disclosure.

Referring to FIGS. 15A and 15B, the smart watch may include a body 1510 including a processor, and a first strap 1520 and a second strap 1521, which are connected to the body 1510.

FIG. 15A illustrates a state in which the smart watch is not worn by the user. Like the necklace-like earphone, each of the first strap 1520 and the second strap 1521 may include a first member that adjusts the bent state of the corresponding strap and a sensor that confirms whether the strap is bent.

The processor included in the body 1510 may confirm whether the smart watch is worn by the user by confirming whether at least one area of the first strap 1520 and the second strap 1521 is bent.

When it is confirmed that at least one area of the first strap 1520 and the second strap 1521 is bent, the processor may apply a current to a member included in the at least one area of the first strap 1520 and the second strap 1521. When the current is applied, the bent states of the first strap 1520 and the second strap 1521 may be adjusted, so that the mobility of the first strap 1520 and the second strap 1521 can be reduced. Accordingly, it is possible to prevent the smart watch from being separated from the user's body.

FIG. 15B illustrates a case in which the smart watch is worn by the user. Unlike the necklace-like earphone, in the smart watch, the first strap 1520 and the second strap 1521 may be connected to each other through a separate connection structure. As described above, the processor may confirm whether the first strap 1520 and the second strap 1521 are bent in order to confirm whether the smart watch is worn by the user. The processor may also confirm whether the smart watch is worn by the user by confirming that the first strap 1520 and the second strap 1521 are connected to each other as illustrated in FIG. 15B. When it is confirmed that the smart watch is worn by the user, the processor may apply a current to members included in the first strap 1520 and the second strap 1521 in order to adjust the bending of the first strap 1520 and the second strap 1521.

FIG. 16 illustrates a configuration of a smart watch according to various embodiments of the present disclosure.

Referring to FIG. 16, the smart watch may include a body 1610 including a processor, and two straps connected to the body, as described above with reference to FIGS. 15A and 15B.

Each strap may include a first member 1620 or 1621 and a second member 1630 or 1631 in order to adjust the bent state of the strap. In a case of the smart watch, in order to prevent the smart watch from being separated from the user's body, an area that should be positioned more closely to the user's body may be set as a second area. The second area may secure a larger tension by the second member 1630 or 1631 in the form of a mesh, which is inserted into the second area, when compared to the first area having the first member 1620 or 1621, which is inserted into the first area, so that the mobility of the second area may become smaller than that of the first area.

According to an embodiment of the present disclosure, in the smart watch, the contraction directions of the first member 1620 or 1621 and the second member 1630 or 1631 may be equal to each other. In this way, the contraction direction of each member may be set according to the type, characteristics, or the like of the electronic device 101.

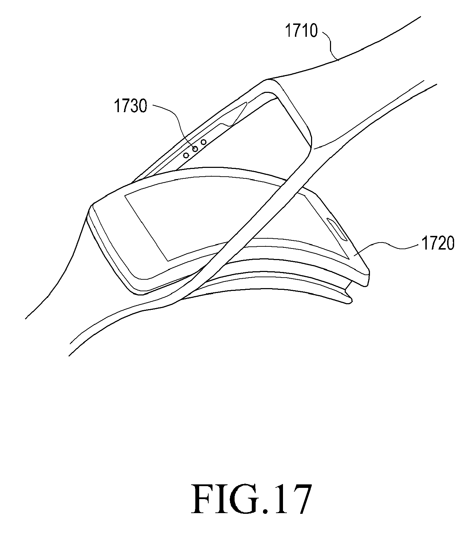

FIG. 17 illustrates an electronic device and a strap that is detachably attached to the electronic device according to various embodiments of the present disclosure.

Referring to FIG. 17, a body 1720 including a processor and a detachable strap 1710 are illustrated. The detachable strap 1710 may include a sensor that adjusts the bent state of the strap and a sensor that confirms whether the strap is bent.

The detachable strap 1710 may be manufactured to be detachably attached to the body 1720 such that the detachable strap 1710 is exchangeable. In this case, the detachable strap 1710 may be electrically connected with the body 1720 through a separate connection terminal 1730. Accordingly, the detachable strap 1710 may perform the transmission/reception of data, a signal, and the like with the body 1720 through the connection terminal 1730. The connection terminal 1730 may include a conductor pad (contact pad) in order to electrically connect the detachable strap 1710 and the body 1720 with each other.

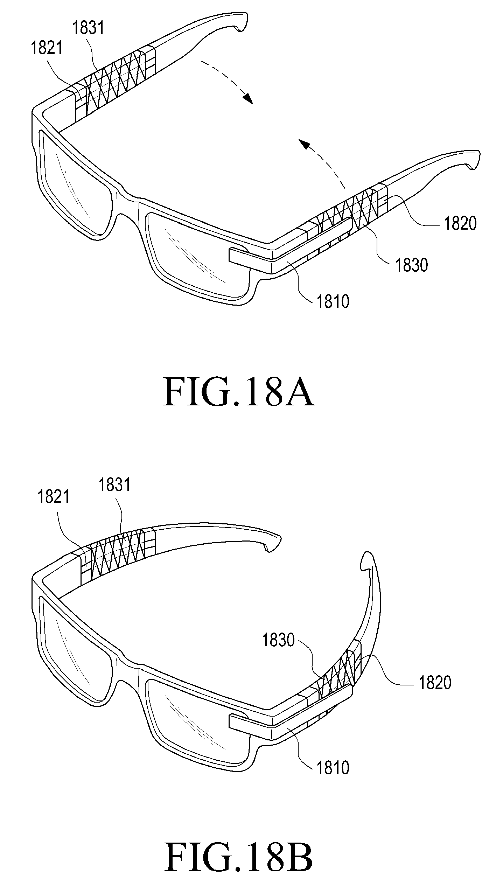

FIGS. 18A and 18B illustrate smart eyeglasses according to various embodiments of the present disclosure.

Referring to FIGS. 18A and 18B, the smart eyeglasses include a body 1810 including a processor, and two straps connected with the body 1810. As described above, each of the straps may be one type of flexible connection part that interconnects respective portions of the electronic device. Each of the temples of the smart eyeglasses is also one type of flexible connection part that interconnects respective portions of the smart eyeglasses. Thus, hereinafter, the temples of the smart eyeglasses will be referred to as straps for the convenience of description.

FIG. 18A illustrates a state in which the smart eyeglasses are not worn by the user. Like the necklace-like earphone and the smart watch, each of the straps connected to the body 1810 may include a first member 1820 or 1821 and a second member 1830 or 1831 to adjust the bent state of the strap. Alternatively, each of the straps may include a sensor that confirms whether the strap is bent.

The processor included in the body 1810 may confirm whether the smart glasses are worn by the user by confirming whether at least one area of each of the straps is bent.

When it is confirmed that the at least one area of each of the strap is bent, the processor may apply a current to the first member 1820 or 1821 and the second member 1830 or 1831. The mobility of each of the strap may be reduced as the current is applied thereto and the bent state of each of the straps may be adjusted. Accordingly, it is possible to prevent the smart glasses from being separated from the user's body.

FIG. 18B illustrates a case in which the smart eyeglasses is worn by the user. As the current is applied, each first member 1820 or 1821 and each second member 1830 or 1831 are contracted in a set direction so that the smart eyeglasses and the user's body may come to closer to each other.

As in the smart watch, in the smart eyeglasses, an area that should be positioned more closely to the user's body may be set as a second area in order to prevent the smart eyeglasses from being separated from the user's body. The second area may secure a larger tension by the second member 1830 or 1831 in the form of a mesh, which is inserted into the second member 2830 or 1831, as compared to the first area including the first member 1820 or 1821, which is inserted into the first area, so that the mobility of the second area may become smaller than that of the first area. In addition, as in the smart watch, in the smart eyeglasses, the contraction directions of the first member 1820 or 1821 and the second member 1830 or 1831 may be equal to each other. In this way, the contraction direction of each member may be set according to the characteristics of the electronic device 101.

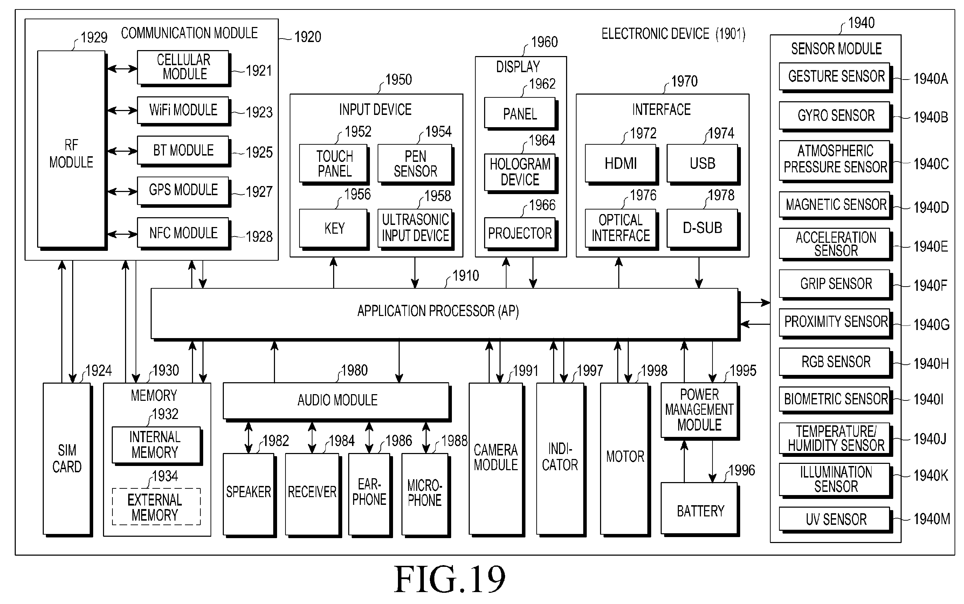

FIG. 19 is a block diagram illustrating an electronic device 1901 according to various embodiments of the present disclosure. The electronic device 1901 may form, for example, the whole or a part of the electronic device 101 illustrated in FIG. 1.

Referring to FIG. 19, the electronic device 1901 may include at least one AP ("processor") 1910, a communication module 1920, a subscriber identification module (SIM) card 1924, a memory 1930, a sensor module 1940, an input device 1950, a display 1960, an interface 1970, an audio module 1980, a camera module 1991, a power management module 1995, a battery 1996, an indicator 1997, and a motor 1998.

The processor 1910 may drive, for example, an operating system or an application program so as to control a plurality of hardware or software components connected thereto, and may also perform various data processing and arithmetic operations. The processor 1910 may be implemented by, for example, a system-on-chip (SoC). According to an embodiment of the present disclosure, the processor 1910 may further include a graphics processing unit (GPU) and/or an image signal processor. The processor 1910 may include at least some (e.g., cellular module 1921) among the components illustrated in FIG. 19. The processor 1910 may load and process a command or data received from at least one of the other components (e.g., the non-volatile memory) in a volatile memory and may store various data in the non-volatile memory.

The communication module 1920 may have a configuration that is the same as or similar to the communication interface 170 of FIG. 1. The communication module 1920 may include, for example, a cellular module 1921, a Wi-Fi module 1923, a Bluetooth module 1925, a GNSS module 1927 (e.g., a GPS module, a Glonass module, a BeiDou module or a Galileo module), an NFC module 1928, and a radio frequency (RF) module 1929.

The cellular module 1921 may support, for example, a voice call, a video call, a text message service, or an internet service through a communication network. According to an embodiment of the present disclosure, the cellular module 1921 may perform discrimination and authentication of the electronic device 1901 within the communication network by using the SIM card 1924. According to an embodiment of the present disclosure, the cellular module 1921 may perform at least some of the functions that may be provided by the processor 1910. According to an embodiment of the present disclosure, the cellular module 1921 may include a CP.

Each of the Wi-Fi module 1923, the Bluetooth module 1925, the GNSS module 1927, and the NFC module 1928 may include, for example, a processor to process data transmitted/received therethrough. According to a certain embodiment of the present disclosure, at least some (two or more) of the cellular module 1921, the Wi-Fi module 1923, the Bluetooth module 1925, the GNSS module 1927, and the NFC module 1928 may be incorporated in a single integrated chip (IC) or an IC package.

The RF module 1929 may transmit/receive a communication signal (e.g., an RF signal). The RF module 1929 may include, for example, a transceiver, a power amp module (PAM), a frequency filter, a low noise amplifier (LNA), or an antenna. According to an embodiment of the present disclosure, at least one of the cellular module 1921, the Wi-Fi module 1923, the Bluetooth module 1925, the GNSS module 1927, and the NFC module 1928 may transmit/receive an RF signal through a separate RF module.

The SIM card 1924 may include, for example, a card including a SIM and/or an embedded SIM, and may also include intrinsic identification information (e.g., integrated circuit card identifier (ICCID)) or subscriber information (e.g., international mobile subscriber identity (IMSI).

The memory 1930 (e.g., the memory 130) may include an internal memory 1932 or an external memory 1934. The internal memory 1932 may include at least one of, for example, a volatile memory (e.g., dynamic random access memory (DRAM), static RAM (SRAM), or synchronous DRAM (SDRAM)), a nonvolatile memory (e.g., one time programmable read only memory (OTPROM), PROM, erasable and programmable ROM (EPROM), electrically erasable and programmable ROM (EEPROM), mask ROM, flash ROM, flash memory (e.g., NAND flash memory, or NOR flash memory), hard drive, or solid state drive (SSD)).

The external memory 1934 may further include a flash drive, e.g., compact flash (CF), secure digital (SD), micro secure digital (micro-SD), mini secure digital (mini-SD), extreme digital (xD), multimedia card (MMC), or memory stick. The external memory 1934 may be functionally and/or physically connected to the electronic device 1901 through various interfaces.

The sensor module 1940 may measure a physical quantity or sense an operating status of the electronic device 1901, and convert measured or sensed information into electric signals. The sensor module 1940 may include at least one of, for example, a gesture sensor 1940A, a gyro sensor 1940B, an atmospheric pressure sensor 1940C, a magnetic sensor 1940D, an acceleration sensor 1940E, a grip sensor 1940F, a proximity sensor 1940G, a color sensor 1940H (e.g., red, green, blue (RGB) sensor), a biometric sensor 1940I, a temperature/humidity sensor 1940J, an illumination sensor 1940K, and an ultraviolet (UV) sensor 1940M. Additionally or alternatively, the sensor module 1940 may include, for example, an E-nose sensor (not illustrated), an electromyography (EMG) sensor (not illustrated), an electroencephalogram (EEG) sensor (not illustrated), an electrocardiogram (ECG) sensor (not illustrated), an infra-red (IR) sensor (not illustrated), an iris sensor (not illustrated), or a fingerprint sensor (not illustrated). The sensor module 1940 may further include a control circuit for controlling one or more sensors incorporated therein. In a certain embodiment of the present disclosure, the electronic device 1901 may further include a processor configured to control the sensor module 1940 as a part of the processor 1910 or separate from the processor 1910 so as to control the sensor module while the processor 1910 is in sleep mode.

The input device 1950 may include a touch panel 1952, a (digital) pen sensor 1954, a key 1956, or an ultrasonic input device 1958. The touch panel 1952 may comprise at least one of, for example, a capacitive type touch panel, a resistive type touch panel, an infrared type touch panel, and an ultrasonic type panel. Also, the touch panel 1952 may further include a control circuit. In addition, the touch panel 1952 may further include a tactile layer so as to provide a tactile reaction to a user.

The (digital) pen sensor 1954 may be, for example, a part of the touch panel or may include a separate recognition sheet. The key 1956 may include, for example, a physical button, an optical key, or a keypad. The ultrasonic input device 1958 may sense ultrasonic waves generated by an input tool, through a microphone (e.g., microphone 1988) so that data corresponding to the sensed ultrasonic waves can be confirmed.

The display 1960 (e.g., the display 160) may include a panel 1962, a hologram device 1964, or a projector 1966. The panel 1962 may include a configuration that is the same as or similar to that of the display 160 of FIG. 1. The panel 1962 may be implemented to be flexible, transparent, or wearable. The panel 1962 may be configured as a single module with the touch panel 1952. The hologram device 1964 may show a stereoscopic image in the air using interference of light. The projector 1966 may project light onto a screen so as to display an image. The screen may be located inside or outside the electronic device 1901. According to an embodiment of the present disclosure, the display 1960 may further include a control circuit to control the panel 1962, the hologram device 1964, or the projector 1966.

The interface 1970 may include, for example, an HDMI 1972, a USB 1974, an optical interface 1976, or a D-subminiature (D-sub) 1978. The interface 1970 may be included, for example, in the communication interface 170 illustrated in FIG. 1. Additionally or alternatively, the interface 1970 may include, for example, a mobile high-definition link (MHL) interface, a SD card/MMC interface, or an infrared data association (IrDA) standard interface.

The audio module 1980 may bi-directionally convert, for example, sounds and electric signals. At least some of the components of the audio module 1980 may be included, for example, in the input/output interface 150 illustrated in FIG. 1. The audio module 1980 may process sound information input or output through, for example, a speaker 1982, a receiver 1984, an earphone 1986, or a microphone 1988.

The camera module 1991 may be a device capable of photographing, for example, a still image and a moving image. According to an embodiment of the present disclosure, the camera module 1991 may include at least one image sensor (e.g., a front sensor or a rear sensor), a lens, an image signal processor (ISP), or a flash (e.g., LED or xenon lamp).

The power management module 1995 may manage, for example, the electric power of the electronic device 1901. According to an embodiment of the present disclosure, the power management module 1995 may include a power management integrated circuit (PMIC), a charger IC, or a battery or fuel gauge. The PMIC may be configured in a wired and/or wireless charge type. The wireless charge type may include, for example, a magnetic resonance type, a magnetic induction type, or an electromagnetic wave type, and may further include an additional circuit for wireless charge, such as a coil loop, a resonance circuit, or a rectifier. The battery gauge may measure the residual amount of the battery 1996 and a voltage, current, or temperature during charging. The battery 1996 may store or create electric power and supply the electric power to the electronic device 1901. The battery 1996 may include, for example, a rechargeable battery or a solar battery.

The indicator 1997 may indicate a specific status of the electronic device 1901 or of a part thereof, such as a booting status, a message status, or a charged status. The motor 1998 may convert an electric signal into a mechanical vibration, and may generate a vibration or a haptic effect. Although not illustrated, the electronic device 1901 may include a processor (e.g., GPU) to support a mobile TV. The processor to support a mobile TV may process media data that complies with the standards of, for example, digital multimedia broadcasting (DMB), digital video broadcasting (DVB), or mediaFlo™.

Each of the above-described component elements of hardware according to the present disclosure may be configured with one or more components, and the names of the corresponding component elements may vary based on the type of electronic device. The electronic device according to various embodiments of the present disclosure may include at least one of the aforementioned elements. Some elements may be omitted or other additional elements may be further included in the electronic device. Also, some of the hardware components according to various embodiments may be combined into one entity, which may perform functions identical to those of the relevant components before the combination.

The term "module" as used herein may, for example, may correspond to a unit including one of hardware, software, and firmware or a combination of two or more of them. The "module" may be interchangeably used with, for example, the term "unit," "logic," "logical block," "component," "element," or "circuit". The "module" may be a minimum unit of an integrated component element or a part thereof. The "module" may be a minimum unit for performing one or more functions or a part thereof. The "module" may be mechanically or electronically implemented. For example, the "module" according to the present disclosure may include at least one of an application-specific integrated circuit (ASIC) chip, field programmable gate arrays (FPGA), and a programmable-logic device for performing operations which has been known or are to be developed hereinafter.

According to various embodiments of the present disclosure, at least some of the devices (for example, modules or functions thereof) or the method (for example, operations) according to the present disclosure may be implemented by a command stored in a computer-readable storage medium in a programming module form. The instruction, when executed by a processor (e.g., the processor 120), may cause the one or more processors to execute the function corresponding to the instruction. The computer-readable storage medium may be, for example, the memory 130.

The computer readable recording medium may include a hard disk, a floppy disk, magnetic media (e.g., a magnetic tape), optical media (e.g., a compact disc ROM (CD-ROM) and a DVD), magneto-optical media (e.g., a floptical disk), a hardware device (e.g., a ROM, a RAM, a flash memory), and the like. In addition, the program instructions may include high class language codes, which can be executed in a computer by using an interpreter, as well as machine codes made by a compiler. The aforementioned hardware device may be configured to operate as one or more software modules in order to perform the operation of the present disclosure, and vice versa.

The programming module according to the present disclosure may include one or more of the aforementioned components or may further include other additional components, or some of the aforementioned components may be omitted. Operations executed by a module, a programming module, or other component elements according to various embodiments of the present disclosure may be executed sequentially, in parallel, repeatedly, or in a heuristic manner. Further, some operations may be executed according to another order or may be omitted, or other operations may be added.

According to various embodiments of the present disclosure, in a storage medium that stores commands therein, the commands may be set such that when they are executed by at least one processor, the at least one processor may perform at least one operation. The at least one operation performed by the at least one processor may include detecting whether the first area of the strap is bent through the first sensor within the strap of the electronic device, and supplying a current to the first member within the strap such that the bent state of the first area is adjusted when it is detected that the first area is bent.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A wearable electronic device comprising:
a body including a processor; and
at least one strap being connected with the body,
wherein the strap includes:
a first sensor configured to detect whether a first area of the strap is bent; and
a first member configured to be contracted in a first direction when a current is applied thereto to adjust a bent state of the first area,
wherein the processor detects whether the first area is bent by using the first sensor, and when it is detected that the first area is bent, the processor applies a current to the first member to adjust the bent state of the first area.

2. The electronic device of claim 1, wherein the first sensor includes a resistor arranged in the first area of the strap and having a resistance that varies according to a bent angle of the first area of the strap.

3. The electronic device of claim 2, wherein the processor detects a change in resistance of the resistor included in the first sensor, and detects whether the first area is bent based on the detected change in resistance.

4. The electronic device of claim 1, wherein the processor confirms, through the first sensor, the bent state of the first area when the current is applied, and when the confirmed bent state of the first area corresponds to a selected bent state, the processor applies the current to the first member on a first cycle that is selected such that the bent state of the first area is maintained at the selected bent state.

5. The electronic device of claim 4, wherein the selected bent state is selected based on the bent state of the first area that is detected through the first sensor or is selected according to a user's input.

6. The electronic device of claim 1, wherein the first area is set to be arranged within a selected length from the body.

7. The electronic device of claim 1, wherein the strap further includes:
a second sensor configured to detect whether a second area of the strap is bent; and
a second member configured to be contracted in a second direction to adjust a bent state of the second area when the current is applied thereto.

8. The electronic device of claim 7, wherein, when a state in which the bending of the second area is detected is maintained for a selected length of time, the processor applies the current to the second member such that the bent state of the second area is adjusted.

9. The electronic device of claim 7,
wherein the first member and the second member include a shape memory material, and
wherein the first member or the second member is manufactured in a form of a mesh.

10. The electronic device of claim 7, wherein the first sensor and the second sensor are arranged to be orthogonal to each other such that a first bending direction of the strap, which is detected through the first sensor, and a second bending direction of the strap, which is detected through the second sensor, become different from each other.

11. The electronic device of claim 7, wherein the processor controls at least one function supported by the wearable electronic device based on the bending directions of the first area and the second area, which are detected through the first sensor and the second sensor, respectively.

12. The electronic device of claim 7, wherein the second sensor includes a resistor arranged within the second area of the strap and the resistor has a resistance that varies according to a bent angle.

13. The electronic device of claim 12, wherein the processor detects a change in resistance of the resistor included in the second sensor, and detects whether the second area is bent based on the detected change in resistance.

14. A non-transitory computer-readable storage medium that stores a program executed on a computer, wherein the program includes an executable command that, when executed by a processor included in a wearable electronic device, causes the processer to:
detect, through a first sensor within a strap of the electronic device, whether a first area of the strap is bent; and
apply a current to the first member within the strap when it is detected that the first area is bent to adjust a bent state of the first area.

15. The computer-readable storage medium of claim 14, wherein the applying of the current to the first member within the strap includes:
confirming the bent state of the first area through the first sensor; and
applying, when the confirmed bent state of the first area corresponds to a selected bent state, the current to the first member on a first cycle that is selected so as to cause the bent state to be maintained at the selected bent state.
